# EUROPÄISCHE PATENTANMELDUNG

(11) **EP 2 610 296 A1**
(43) Veröffentlichungstag der Anmeldung: **03.07.2013**
(21) Anmeldenummer: 11196044.9
(22) Anmeldetag: 29.12.2011
(51) Int. Cl.: C08L 9/02, C08C 2/02, C08F 236/10, C08F 236/12

(54) **Verfahren zur Herstellung von gereinigten Nitrilkautschuken**

(71) Anmelder: Lanxess Deutschland GmbH, 51369 Leverkusen (DE)
(72) Erfinder: David, Sarah, 41539 Dormagen (DE); Forner, Florian, 50823 Köln (DE); Hüsgen, Stefan, 41569 Rommerskirchen (DE); Müller, Julia Maria, 5133 Gilgenberg (AT); Brandau, Sven, 67000 Strasbourg (FR); Kaiser, Andreas, 67000 Strasbourg (FR); Schwan, Peter, 51373 Leverkusen (DE)

(57) **Zusammenfassung**

Bereitgestellt wird ein neues Verfahren zur Herstellung eines gereinigten Nitrilkautschuks, indem der Nitrilkautschuk, der spezielle Verunreinigungen enthält, einer definierten Ultrafiltration unterzogen wird. Es gelingt auf diesem Weg, den Gehalt der speziellen Verunreinigungen im Nitrilkautschuk substanziell zu verringern.

## Beschreibung

Die Erfindung betrifft ein Verfahren zur Herstellung von gereinigten Nitrilkautschuken, die gegenüber dem zur Reinigung eingesetzten Nitrilkautschuk einen deutlich reduzierten Anteil spezieller Nebenprodukte aufweisen, ferner die nach diesem Verfahren erhältlichen gereinigten Nitrilkautschuke, deren Verwendung zur Herstellung von Vulkanisaten sowie diese Vulkanisate.

Unter Nitrilkautschuken, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dien-Einheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen auszeichnen, zunehmend nachgefragt.

Großtechnisch werden Nitrilkautschuke bisher fast ausschließlich durch sogenannte Emulsionspolymerisation hergestellt. Zur Regelung des Molekulargewichts und damit auch der Viskosität des entstehenden Nitrilkautschuks werden dabei häufig Dodecyhnercaptane, insbesondere Tertiärdodecyhnercaptane ("TDDM" oder auch "TDM" abgekürzt) eingesetzt. Nach der Polymerisation wird der erhaltene NBR-Latex in einem ersten Schritt koaguliert und daraus der NBR-Feststoff isoliert. Für bestimmte Anwendungen ist es gewünscht, das Molekulargewicht dieser Nitrilkautschuke durch eine nachfolgende Metathese-Reaktion kontrolliert zu verringern und/oder aus diesen Nitrilkautschuken durch Hydrierung den entsprechenden hydrierten Nitrilkautschuk herzustellen. Die Metathese erfolgt unter Einsatz spezieller metathese-aktiver Metallkomplexkatalysatoren und die Hydrierung kann z.B. unter Einsatz homogener oder auch heterogener Hydrierkatalysatoren durchgeführt werden. Die Hydrierkatalysatoren basieren üblicherweise auf Rhodium, Ruthenium oder Titan. Es können aber auch Platin, Iridium, Palladium, Rhenium, Ruthenium, Osmium, Kobalt oder Kupfer entweder als Metall oder aber bevorzugt in Form von Metallverbindungen eingesetzt werden

Sowohl für spezielle Anwendungen im Spritzgussartikelbereich, Anwendungen mit Lebensmittelkontakt, im medizinischen Bereich, in der Elektronikindustrie als auch für weitere Reaktionen wie Hydrierungen in Gegenwart empfindlicher Übergangsmetallkatalysatoren sind besonders reine Nitrilkautschuke erforderlich. Die bisher durch Emulsionspolymerisation hergestellten Nitrilkautschuke müssen daher häufig aufwändig von den Fremdstoffen aus dem Herstellprozess befreit werden. Für Nitrilkautschuke mit einem zu großen Fremdstoffanteil ist die Einsetzbarkeit insbesondere im medizinischen Umfeld und bei Lebensmittelkontakt aus toxikologischen Gründen meist stark eingeschränkt, wobei die tolerable Menge an Fremdstoffen von der Art des Fremdstoffes abhängig ist. Bei durch radikalische Emulsionspolymerisation hergestellten Nitrilkautschuken sind in den vorgenannte Anwendungen Fremdstoffanteile, die deutlich geringer als 2 Gew.-% sind, bevorzugt. Der Einsatz von Formteilen aus Nitrilkautschuken mit einem zu großen Fremdstoffanteil in elektronischen Anwendungen ist ebenfalls nur bedingt möglich. Dies gilt vor allen Dingen dann, wenn die Kautschuke Wasser und/oder Ionen als Fremdstoffe enthalten, da diese das Korrosions- und Leitfähigkeitsverhalten der elektronischen Erzeugnisse stark beeinflussen und durch thermischen Einfluss nicht immer rückstandsfrei entfernt werden können. Der Einsatz von Nitrilkautschuken mit einem relativ großen Fremdstoffanteil (größer als 3 Gew.-%) kann in vielen Anwendungen wie bei Spritzgussartikeln oder Extrusionsartikel ferner zu einer verminderten Oberflächenqualität der Artikel sowie zu Formverschmutzungen oder Ausblühungen führen. Nitrilkautschuke mit einem Fremdstoffanteil größer 4 Gew.-%, bezogen auf den Nitrilkautschuk, können für Reaktionen wie Metathesen und/oder Hydrierungen, bei denen in Gegenwart empfindlicher Übergangsmetallkatalysatoren gearbeitet werden muss, häufig nicht eingesetzt werden, da die Fremdstoffe die Reaktionskontrolle erschweren, Umsatzzeiten verlängern und die Katalysatoreffektivität herabsetzen. Des Weiteren können die Fremdstoffe im Falle der Hydrierung maßgeblich zur Korrosion und damit zum Verschleiß der zur Hydrierung benötigten Anlagen beitragen. Oftmals ist die Rückgewinnung der im Nitrilkautschuk verbliebenen Fremdstoffe auch wirtschaftlich von Interesse. Dies tritt besonders dann auf, wenn teure Katalysatoren eingesetzt worden sind, die nach einer Aufarbeitung wieder zur Katalyse eingesetzt werden können.

Die Reinigung der Nitrilkautschuke von Fremdstoffen für die oben genannten Anwendungen geschieht typischerweise durch Fäll- und Waschprozesse mittels Wasser oder in geeigneten organischen Substanzen wie Alkoholen, Ketonen, Ethern oder Mischungen derselben. Eine vollständige Reinigung kann dabei aber nicht grundsätzlich gewährleistet werden. Als besonders problematisch hat sich bei den bisher durch radikalische Emulsionspolymerisation hergestellten Nitrilkautschuken die Abtrennung von niedermolekularen, zum Teil hochsiedenden (>150°C), schlecht oder gar nicht wasserlöslichen Fremdstoffen erwiesen. Hierzu gehören z.B. Emulgatoren, Fettsäuren, Fettsäuresalze und -ester aus der Emulsionspolymerisation des Nitrilkautschuks. Durch die im Stand der Technik bekannten Aufarbeitungs- und Reinigungsverfahren konnten diese Fremdstoffe lange Zeit nicht ausreichend und wenn nur mit erheblichem wirtschaftlichen Aufwand abgetrennt werden, da sie während der Latexkoagulation vom Nitrilkautschuk umschlossen werden und so den Waschvorgängen nicht oder nur schwer zugänglich sind. Möglich ist eine fraktionierte Fällung der Nitrilkautschuke aus Lösung zur Abtrennung von niedermolekularen Verbindungen. Zum Einsatz kommen dabei geeignete organische Lösungsmittel als Fällmittel, in denen das Polymer unlöslich ist (z.B. Methanol), während bestimmte Fremdstoffe wie z.B. die Emulgatoren, Fettsäuren, Fettsäureester sowie Fettsäuresalze gelöst bleiben. Diese Aufarbeitung ist jedoch wegen der benötigten großen Mengen an Lösungs- bzw. Fällmittel ökologisch und ökonomisch nachteilig.

Aus der EP-A-1 524 277 ist ein Verfahren zur Aufreinigung von Elastomeren und insbesondere Nitrilkautschuken bekannt, bei dem durch radikalische Emulsionspolymerisation hergestellte Elastomere durch Ultrafiltration aufgearbeitet werden. Das Verfahren reklamiert die bis zu 99%ige Entfernung der aus der Emulsionspolymerisation herrührenden Nebenprodukte und Fremdstoffe, insbesondere der bei der Polymerisation in großen Mengen eingesetzten Emulgatoren. In den beiden Beispielen der EP-A-1 524 277 wird die Entfernung von Fettsäuren aus einem Nitrilkautschuk bzw. einem hydriertem Nitrilkautschuk gelöst in Monochlorbenzol als organischem Lösungsmittel gezeigt.

In der WO-A-2011/032832 wurde erstmals ein Verfahren zur Herstellung von Nitrilkautschuken beschrieben, bei dem durch Polymerisation in organischer Lösung in wirtschaftlich annehmbaren Reaktionszeiten Nitrilkautschuke mit ausreichend hohen mittleren Molekulargewichten Mₙ erhalten werden konnten. Dieses Verfahren wird in Gegenwart spezieller sogenannter RAFT-Regler durchgeführt. Dass der Einsatz dieser RAFT-Regler bei der NBR Polymerisation zum Erfolg führen würde, war überraschend, insbesondere vor dem Hintergrund früherer Untersuchungen zur Herstellung von Polybutadien in organischer Lösung **(**Macromolecular Chemistry and Physics (2002), 203(3), 522-537**),** welche lediglich Molekulargewichte in technisch uninteressanten Größenordnungen ergaben (technisch verwertbare Polymere auf Butadien-Basis erfordern im Allgemeinen ein Molekulargewicht Mₙ > 50.000 g/mol, gleiches gilt für statistische Copolymere auf Basis Acrylnitril und Butadien). Gelungen ist ferner auch die Polymerisation von Nitrilkautschuken in organischer Lösung in Abwesenheit jeglicher Molekulargewichtsregler bzw. in Anwesenheit spezieller Regler, wie z.B. Mercaptanen, Mercaptoalkoholen, Mercaptocarbonsäuren, Thiocarbonsäuren, Disulfiden, Polysulfiden und Thioharnstoff Diese Verfahren sind Gegenstand noch nicht offengelegter europäischer Patentanmeldungen. Gemeinsam ist all diesen Polymerisationsverfahren in organischer Lösung, dass für ihre Durchführung keine Emulgatoren eingesetzt werden müssen, so dass die erhaltenen Nitrilkautschuke und deren Folgeprodukte wie z.B. hydrierte Nitrilkautschuke entsprechend auch nicht von diesen Emulgatoren befreit werden müssen. Das Polymerisationsverfahren in organischer Lösung wird jedoch oft bei höheren Temperaturen durchgeführt als die wässrige, radikalische Emulsionspolymerisation. Dies bedingt die Entstehung von Nebenprodukten, die bei der wässrigen, radikalischen Emulsionspolymerisation nur in sehr geringem Maß beobachtet werden. Es können z..B. Nebenprodukte entstehen, die durch eine Diels-Alder Reaktion der eingesetzten Monomere gebildet werden (nachfolgend in dieser Patentanmeldung auch als "Diels-Alder-Nebenprodukte" bezeichnet). Die "Diels-Alder-Nebenprodukte" umfassen dabei sowohl Nebenprodukte, die durch Diels-Alder Reaktion von zwei Molekülen des gleichen Monomers entstehen, als auch solche, die durch Diels-Alder Reaktion von zwei Molekülen verschiedener Monomere entstehen. Dies bedeutet beispielsweise, dass im Fall eines Butadien-Acrylnitril Copolymers 4-Vinylcyclohexen ("VCH") und 4-Cyanocyclohexen ("CCH") als Diels-Alder-Nebenprodukte entstehen können. VCH entsteht durch Diels-Alder Reaktion aus 2 Molekülen 1,3-Butadien, CCH durch Diels-Alder Reaktion aus 1,3-Butadien und Acrylnitril. Die Anwesenheit dieser Diels-Alder-Nebenprodukte kann sich nachteilig in einzelnen Anwendungen sowie in Folgeumsetzungen wie Metathese-oder Hydrierungsreaktionen auswirken und ist somit unerwünscht. Ein Verfahren zur Entfernung dieser Diels-Alder-Nebenprodukte ist bisher nicht in der Literatur beschrieben worden.

**Die Aufgabe der vorliegenden Erfindung** bestand somit darin, ein Verfahren zur Reinigung von Diels-Alder-Nebenprodukte enthaltenden Nitrilkautschuken bereitzustellen, mit dem der Anteil der Diels-Alder-Nebenprodukte im Nitrilkautschuk so deutlich und in kontrollierter Form verringert werden kann, dass Anwendungen, in denen es auf besondere Reinheit ankommt, sowie nachfolgende Reaktionen wie Metathese und Hydrierung nicht nachteilig beeinflusst werden.

**Diese Aufgabe wird gelöst** durch ein Verfahren zur Herstellung eines **gereinigten Nitrilkautschuks,** welches dadurch gekennzeichnet ist, dass ein Nitrilkautschuk, der Wiederholungseinheiten mindestens eines konjugierten Dien-Monomers und mindestens eines α,β-ungesättigten Nitril-Monomers aufweist und Diels-Alder-Nebenprodukte dieser Monomere enthält, einer Ultrafiltration unterzogen wird, indem der in mindestens einem organischen Lösungsmittel gelöste Nitrilkautschuk ein- oder mehrfach über eine Ultrafiltrationsmembran geleitet wird, dabei ein nicht die Ultrafiltrationsmembran durchströmender, den gereinigten Nitrilkautschuk enthaltender Retentatstrom erhalten wird sowie ein die Ultrafiltrationsmembran durchströmender, Diels-Alder-Nebenprodukte enthaltender Permeatstrom, unter den Maßgaben, dass
(i) die Ultrafiltrationsmembran ein oder mehrere poröse Schichten aufweist und die Schicht mit den kleinsten Poren einen Porendurchmesser im Bereich von 1-200 nm besitzt,
(ii) die Ultrafiltration bei einer Temperatur im Bereich von 10 bis 150°C und unter Anwendung eines Druckes im Bereich von 1 bis 80 bar durchgeführt wird, und
(iii) die Strömungsgeschwindigkeit des Retentatstroms während der Ultrafiltration auf einen Wert größer 0,2 m/sec eingestellt wird, und
wobei der Gehalt an Diels-Alder-Nebenprodukten im gereinigten Nitrilkautschuk durch die Ultrafiltration um mindestens 50 Gew.-% reduziert wird gegenüber dem Gehalt im ursprünglich eingesetzten Nitrilkautschuk.

Dass durch die erfindungsgemäße Ultrafiltration die weder ionisch geladenen, noch deutlich polaren Diels-Alder-Nebenprodukte aus dem Nitrilkautschuk erfolgreich abgetrennt werden können, war nicht vorhersehbar, insbesondere vor dem Hintergrund, dass die laut EP-A-1 524 277 aus Nitrilkautschuken abtrennbaren Substanzen wie Emulgatoren, Fettsäuren,-salze und ―ester ionisch bzw. deutlich polar sind.

Ein **weiterer Gegenstand der Erfindung** ist der gereinigte Nitrilkautschuk, der durch die erfindungsgemäße Ultrafiltration erhältlich ist.

Ein **weiterer Gegenstand der Erfindung** ist die Herstellung von Vulkanisaten, indem der gereinigte Nitrilkautschuks einer Vulkanisation unterzogen wird.

Ein **weiterer Gegenstand der Erfindung** sind die Vulkanisate basierend auf den gereinigten Nitrilkautschuken.

### Gehalt an Verunreinigungen vor bzw. nach dem erfindungsgemäßen Verfahren:

Durch die erfindungsgemäße Ultrafiltration können aus ungereinigten Nitrilkautschuken mit Wiederholungseinheiten mindestens eines konjugierten Dien-Monomers und mindestens eines α,β-ungesättigten Nitril-Monomers entsprechende, gereinigte Nitrilkautschuke hergestellt werden, die einen gegenüber dem ursprünglichen ungereinigten Zustand um mindestens 50 Gew.% reduzierten Gehalt an Diels-Alder-Nebenprodukten aufweisen.

Bevorzugt werden durch das erfindungsgemäße Verfahren gereinigte Nitrilkautschuke erhalten mit einem Gehalt an Diels-Alder-Nebenprodukten, der um mindestens 80 Gew.% bezogen auf den Gehalt im ursprünglich eingesetzten Nitrilkautschuk, reduziert wurde.

Besonders bevorzugt werden durch das erfindungsgemäße Verfahren gereinigte Nitrilkautschuke erhalten mit einem Gehalt an Diels-Alder-Nebenprodukten, der um mindestens 90 Gew.% und bis zu 99,9 Gew.%, bezogen auf den Gehalt im ursprünglich eingesetzten Nitrilkautschuk, reduziert wurde. Als **ungereinigte Nitrilkautschuke** können im erfindungsgemäßen Verfahren Nitrilkautschuke eingesetzt werden, die einen Gehalt an Diels-Alder-Nebenprodukten der Monomere im Bereich von 0,1 bis 120 Gew.%, bezogen auf 100 Gew.% des Nitrilkautschuks aufweisen.

Unter den **gereinigten Nitrilkautschuken** sind im Rahmen dieser Anmeldung Nitrilkautschuke zu verstehen, deren Gehalt an Diels-Alder-Nebenprodukten der Monomere um mindestens 50 Gew.%, bevorzugt um mindestens 80 Gew.% und besonders bevorzugt um mindestens 90 Gew.% und bis zu 99,9 Gew.%, bezogen auf den Gehalt im ursprünglich eingesetzten Nitrilkautschuk, reduziert wurde.

Ausgehend von einem ungereinigten Nitrilkautschuk mit einem Gehalt an Diels-Alder-Nebenprodukten der Monomere von z.B. 10 Gew.%, bezogen auf 100 Gew.% des Nitrilkautschuks, kann somit bei mindestens 50%iger Reduzierung ein gereinigter Nitrilkautschuk mit einem Gehalt an Diels-Alder-Nebenprodukten der Monomere von 5 Gew.% oder weniger, bezogen auf 100 Gew.% des Nitrilkautschuks, erhalten werden. Bei Einsatz eines ungereinigten Nitrilkautschuks mit dem zuvor beispielsweise genannten Gehalt von 10 Gew.% and Diels-Alder-Nebenprodukten bezogen auf 100 Gew.% des Nitrilkautschuks kann mit dem erfindungsgemäßen Verfahren bevorzugt ein gereinigter Nitrilkautschuk erhalten werden, der nur noch einen Gehalt an Diels-Alder-Nebenprodukten im Bereich von 0,1 Gew.% (99,9 Gew.%ige Entfernung) bis maximal 1 Gew.% (90% Gew.%ige Entfernung), bezogen auf 100 Gew.% des Nitrilkautschuks aufweist.

Das erfindungsgemäße Verfahren zeichnet sich dadurch aus, dass diese relative Aufreinigung eines eingesetzten Nitrilkautschuks unabhängig vom absoluten Verunreinigungsgrad des eingesetzten Nitrilkautschuks gelingt.

Vorteilhafterweise ermöglicht das erfindungsgemäße Verfahrens nicht nur die Entfernung der Diels-Alder-Nebenprodukte, sondern auch die Entfernung anderer Substanzen. Durch das erfindungsgemäße Verfahren können beispielsweise auch Substanzen entfernt werden, die ausgewählt sind aus der Gruppe bestehend aus nicht-umgesetzten Monomeren, nicht umgesetztem Initiator, Initiator-Zerfallsprodukten, Polymerisationsabstoppern, als Antioxidantien eingesetzten Stabilisatoren, Molekulargewichtsreglern sowie Fragmenten oder Zerfallsprodukten dieser Molekulargewichtsregler, und von oligomeren Bestandteilen.

### Einsetzbare Nitrilkautschuke:

Die im erfindungsgemäßen Verfahren eingesetzten Nitrilkautschuke weisen Wiederholungseinheiten mindestens eines konjugierten Diens und mindestens eines α,β-ungesättigten Nitrils auf und enthalten Diels-Alder Nebenprodukte dieser Monomere; optional kann der Nitrilkautschuk zusätzlich auch Wiederholungseinheiten von einem oder mehreren copolymerisierbaren Termonomeren aufweisen. Diese Diels-Alder Nebenprodukte enthaltenden Nitrilkautschuke werden typischerweise durch radikalische Polymerisation in mindestens einem organischen Lösungsmittel hergestellt.

Das **konjugierte Dien-Monomer** im Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril-Monomer** kann jedes bekannte α,β-ungesättigte Nitril eingesetzt werden, bevorzugt sind (C₃-C₅)-(α,β-ungesättigte Nitrile wie Acrylnitril, Methacrylnitril, Ethacrylnitril oder Mischungen davon. Besonders bevorzugt ist Acrylnitril.

Ein bevorzugt im erfindungsgemäßen Verfahren einzusetzender Nitrilkautschuk ist ein Copolymer aus Acrylnitril und 1,3-Butadien.

Der im erfindungsgemäßen Verfahren einzusetzende Nitrilkautschuk kann optional Wiederholungseinheiten von einem oder weiteren copolymerisierbaren Termonomeren aufweisen, beispielsweise von aromatischen Vinylmonomeren, bevorzugt Styrol, α-Methylstyrol und Vinylpyridin, von **fluorhaltigen Vinylmonomeren,** bevorzugt Fluorethylvinylether, Fluorpropylvinylether, o-Fluormethylstyrol, Vinylpenta-fluorbenzoat, Difluoroethylen und Tetrafluoroethylen, oder auch **copolymerisierbaren Antiageing Monomeren,** bevorzugt N-(4-anilinophenyl) acrylamid, N-(4-anilinophenyl) methacrylamid, N-(4-anilinphenyl)cinnamid, N-(4-anilinophenyl) crotonamid, N-phenyl-4-(3-vinylbenzyloxy)anilin und N-phenyl-4-(4-vinylbenzyloxy)anilin sowie **Alkine,** wie 1- oder 2-Butin.

Alternativ kann der erfindungsgemäß einzusetzende Nitrilkautschuk auch Wiederholungseinheiten carboxygruppenhaltiger, copolymerisierbarer Termonomere aufweisen, beispielsweise von α,β-ungesättigten Monocarbonsäuren, deren Estern, deren Amiden, α,β-ungesättigten Dicarbonsäuren, deren Mono- oder ―Diestern, deren entsprechenden Anhydride oder Amide.

Als **α,β-ungesättigte Monocarbonsäuren** kommen bevorzugt Acrylsäure und Methacrylsäure in Frage.

Einsetzbar sind auch **Ester der α,β-ungesättigten Monocarbonsäuren,** bevorzugt deren Alkylester und Alkoxyalkylester. Bevorzugt sind die Alkylester, insbesondere C₁-C₁₈ Alkylester der α,β-ungesättigten Monocarbonsäuren. Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylat, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxymethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylate, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugsweise Fluorobenzylacrylate, und Fluorobenzylmethacrylat. Einsetzbar sind auch Fluoroalkylgruppen haltige Acrylate und -Methacrylate, vorzugsweise Trifluoroethylacrylat und Tetrafluoropropylmethacrylat. Einsetzbar sind auch Aminogruppenhaltige αβ-ungesättigte Carbonsäureester wie Dimethylaminomethyl-acrylat und Diethylaminoethylacrylat.

Als weitere copolymerisierbare Monomere können ferner **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäure-anhydrid.

Eingesetzt werden können ferner **Mono- oder Diester von α,β-ungesättigten Dicarbonsäuren.**

Bei diesen α,β-ungesättigten Dicarbonsäuremono- oder diestern kann es sich beispielsweise handeln um **Alkyl-,** bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt C₂-C₁₂ Alkoxyalkyl-, besonders bevorzugt C₃-C₈-Alkoxyalkyl, **Hydroxyalkyl,** bevorzugt C₁-C₁₂ Hydroxyalkyl-, besonders bevorzugt C₂-C₈-Hydroxyalkyl, **Epoxyalkyl,** bevorzugt C₃-C₁₂ Epoxyalkyl, **Cycloalkyl-,** bevorzugt C₅-C_{12―}Cycloalkyl-, besonders bevorzugt C₆-C₁₂―Cycloalkyl, **Alkylcycloalkyl-,** bevorzugt C₆-C₁₂―Alkylcycloalkyl-, besonders bevorzugt C₇-C₁₀-Alkylcycloalkyl, **Aryl-,** bevorzugt C₆-C₁₄―Aryl-Mono- oder ―Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der α,β-ungesättigten Monocarbonsäuren** sind Methoxyethyl(meth)acrylat, Ethoxyethyl(meth)acrylat und Methoxymethyl(meth)acrylat. Insbesondere wird Methoxyethylacrylat eingesetzt.

Besonders bevorzugte **Hydroxyalkylester der α,β-ungesättigten Monocarbonsäuren** sind Hydroxyethyl(meth)acrylat, Hydroxypropyl-(meth)acrylat und Hydroxybutyl(meth)acrylat.

Besonders bevorzugte **Epoxyalkylester der α,β-ungesättigten Monocarbonsäuren** sind 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethylmethacrylat, (6',7'-Epoxyheptyl)acrylat, (6',7'-Epoxyheptyl)methacrylat.

Als sonstige **Ester der α,β-ungesättigten Monocarbonsäuren** werden ferner beispielsweise Polyethylenglykol(meth)acrylat, Polypropylenglykol(meth)acrylat, N-(2-Hydroxyethyl)acrylamide, N-(2-Hydroxymethyl)acrylamide und Urethan(meth)acrylat eingesetzt.

Beispiele von **α,β-ungesättigten Dicarbonsäuremonoestern** umfassen
● Maleinsäuremonoalkylester, bevorzugt Monomethylmaleat, Monoethylmaleat, Monopropyl maleat und Mono-n-butylmaleat;
● Maleinsäuremonocycloalkylester, bevorzugt Monocyclopentylmaleat, Monocyclohexyl maleat und Monocycloheptylmaleat;
● Maleinsäuremonoalkylcycloalkylester, bevorzugt Monomethylcyclopentylmaleat und Monoethylcyclohexylmaleat;
● Maleinsäuremonoarylester, bevorzugt Monophenylmaleat;
● Maleinsäuremonobenzylester, bevorzugt Monobenzylmaleat;
● Fumarsäuremonoalkylester, bevorzugt Monomethylfumarat, Monoethylfumarat, Monopropyl fumarat und Mono-n-butyl fumarat;
● Fumarsäuremonocycloalkylester, bevorzugt Monocyclopentylfumarat, Monocyclohexyl fumarat und Monocycloheptylfumarat;
● Fumarsäuremonoalkylcycloalkylester, bevorzugt Monomethylcyclopentylfumarat und Monoethylcyclohexylfumarat;
● Fumarsäuremonoarylester, bevorzugt Monophenylfumarat;
● Fumarsäuremonobenzylester, bevorzugt Monobenzylfumarat;
● Citraconsäuremonoalkylester, bevorzugt Monomethylcitraconat, Monoethylcitraconat, Monopropylcitraconat und Mono-n-butyl citraconat;
● Citraconsäuremonocycloalkylester, bevorzugt Monocyclopentylcitraconat, Monocyclohexyl citraconat und Monocycloheptylcitraconat;
● Citraconsäuremonoalkylcycloalkylester, bevorzugt Monomethylcyclopentylcitraconat und Monoethylcyclohexylcitraconat;
● Citraconsäuremonoarylester, bevorzugt Monophenylcitraconat;
● Citraconsäuremonobenzylester, bevorzgut Monobenzylcitraconat;
● Itaconsäuremonoalkylester, bevorzugt Monomethylitaconat, Monoethylitaconat, Monopropyl itaconat und Mono-n-butyl itaconat;
● Itaconsäuremonocycloalkylester, bevorzugt Monocyclopentylitaconat, Monocyclohexyl itaconat und Monocycloheptylitaconat;
● Itaconsäuremonoalkylcycloalkylester, bevorzugt Monomethylcyclopentylitaconat und Monoethylcyclohexylitaconat;
● Itaconsäuremonoarylester, bevorzugt Monophenylitaconat;
● Itaconsäuremonobenzylester, bevorzugt Monobenzylitaconat.
● Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Es ist ferner möglich, als weitere copolymerisierbare Monomere radikalisch polymerisierbare Verbindungen einzusetzen, die pro Molekül zwei oder mehr olefinische Doppelbindungen enthalten. Beispiele solcher zwei- oder mehrfach ungesättigter Verbindungen sind zwei- oder mehrfach ungesättigte Acrylate, Methacrylate oder Itaconate von Polyolen wie z.B. 1,6-Hexandioldiacrylat (HDODA), 1,6-Hexandioldimethacrylat, Ethylenglykoldiacrylat, Ethylenglykoldimethacrylat (EGDMA), Diethylenglykoldimethacrylat, Triethylenglykoldiacrylat, Butandiol-1,4-diacrylat, Propandiol-1,2-diacrylat, Butandiol-1,3-dimethacrylat, Neopentylglykoldiacrylat, Trimethylolpropandiacrylat, Trimethylolpropandimethacrylat, Trimethylolethandiacrylat, Trimethylolethandimethacrylat, Trimethylolpropantriacrylat, Trimethylolpropantrimethacrylat (TMPTMA), Glycerindi- und -triacrylat, Pentaerythritdi-, -tri- und tetraacrylat oder -methacrylat, Dipentaerythrittetra, -penta- und -hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylen-glykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an den mindestens einen konjugierten Dien-Monomer und dem mindestens einen α,β-ungesättigtem Nitril-Monomeren im Nitrilkautschuk können in weiten Bereichen schwanken. Der Anteil des oder der Summe der konjugierten Diene liegt üblicherweise im Bereich von 40 bis 90 Gew.-%, bevorzugt im Bereich von 50 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Monomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Soweit es sich bei den Termonomeren um solche Monomere handelt, die tertiäre Radikale bilden (z.B. Methacrylsäure), hat es sich bewährt, diese in Mengen von 0 bis 10 Gew.% einzusetzen.

Es ist anzumerken, dass die zuvor genannte Begrenzung der zusätzlichen Monomere auf max. 40% nur für die Konstellation gilt, dass die Gesamtmenge an Monomeren dem Polymerisationsansatz zu Beginn bzw. während der Reaktion zudosiert wird (also zur Erzeugung statistischer Terpolymersysteme). Bei der nachfolgend geschilderten Polymerisationsvariante (1) ist es natürlich möglich, einen erfindungsgemäß hergestellten Nitrilkautschuk aufgrund der Tatsache, dass er in der Polymerhauptkette und/oder den Endgruppen Fragmente des oder der eingesetzten Regler aufweist, als Makro-Regler einzusetzen und durch Umsatz mit geeigneten Monomere in beliebiger Menge z.B. zur Generierung von Block-Systemen einzusetzen.

Die Glastemperaturen der eingesetzten ungereinigten sowie auch der entsprechend gereinigten Nitrilkautschuke liegen üblicherweise im Bereich von -70°C bis +20°C, vorzugsweise im Bereich -60°C bis 10°.

Die im erfindungsgemäßen Verfahren einsetzbaren Nitrilkautschuke besitzen üblicherweise einen Polydispersitätsindex im Bereich von 1,1 bis 6,0, bevorzugt von 1,3 bis 5,0, besonders bevorzugt von 1,4 bis 4,5. Im Fall von Ausführungsvariante (1) ist es aufgrund des lebenden Charakters der Polymerisation möglich, Nitrilkautschuke mit einer engen Molekulargewichtsverteilung zu erhalten. Hergestellt werden können dann Nitrilkautschuke mit einem Polydispersitätsindex im Bereich von 1,1 bis 2,5, bevorzugt von 1,3 bis 2,4, besonders bevorzugt von 1,4 bis 2,2, insbesondere von 1,5 bis 2,0, ganz besonders bevorzugt von 1,5 bis kleiner 2.

### Polymerisation zum Diels-Alder Nebenprodukte enthaltenden Nitrilkautschuk: Lösungsmittel:

Die im erfindungsgemäßen Verfahren eingesetzten Nitrilkautschuke werden üblicherweise durch radikalische Polymerisation der entsprechenden Monomere in mindestens einem organischen Lösungsmittel hergestellt. Große Mengen Wasser, wie im Fall der Emulsionspolymerisation, sind nicht im Reaktionssystem vorhanden. Geringere Mengen Wasser in der Größenordnung von bis zu 5 Gew.%, bevorzugt bis 1 Gew.% (bezogen auf die Menge des organischen Lösungsmittels) können durchaus während der Polymerisation zugegen sein. Entscheidend ist, dass die Mengen anwesenden Wassers so gering gehalten werden muss, dass es nicht zu einer Ausfällung des sich bildenden Nitrikautschuks kommt. Es sei an dieser Stelle klar gestellt, dass es sich bei der Polymerisation in Lösung nicht um eine Emulsionspolymerisation handelt.

Als organische Lösungsmittel geeignet sind beispielsweise Dimethylacetamid, Monochlorbenzol, Toluol, Ethylacetat, 1,4-Dioxan, t-Butanol, Isobutyronitril, 3-Propanon, Dimethylcarbonat, 4-Methylbutan-2-on, Aceton, Acetonitril und Methylethylketon. Bevorzugt sind polare Lösungsmittel, welche einen Hildebrand'schen Lösungsparameter δ (δ = ((ΔH_{V}-RT)/Vm)^{½} [(MPa)^{½}]) (Vₘ = molares Volumen; ΔH_{V} = Verdampfungsenthalpie; R = ideale Gaskonstante)) in einem Bereich zwischen 15,5 und 26 (MPa) ^{½} besitzen. Nicht eingesetzt werden können Lösungsmittel, die als Transferreagenzien in die Reaktion eingreifen, z.B. Tetrachlorkohlenstoff, Thiole und weitere dem Fachmann als solche bekannte Solventien dieser Art. Ebenfalls möglich ist es, ein Gemisch von zwei oder mehr organischen Lösungsmitteln einzusetzen. Es können auch Lösungsmittel eingesetzt werden, die den og. Anforderungen genügen und einen Siedepunkt besitzen, der unterhalb desjenigen von Acrylnitril liegt, wie z.B. Methyl-tert.butylether (MTBE).

### Zusatz von Reglern:

Die radikalische Polymerisation in Lösung zur Herstellung der im erfindungsgemäßen Verfahren eingesetzten Nitrilkautschuke kann in verschiedenen Varianten durchgeführt werden,
**(1) in Anwesenheit einer Verbindung der allgemeinen Strukturformel (VI)** 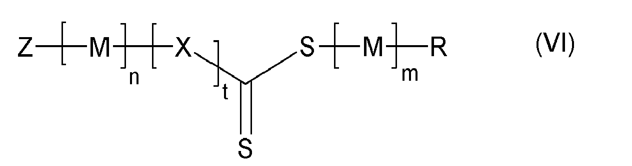 worin
   - **Z**: für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
   - **R**: **(a)** für den Fall, dass m # 0 ist, die gleichen Bedeutungen besitzt wie der Rest Z und **(b)** für den Fall, dass m = 0 ist, für H, einen linearen oder verzweigten, gesättigten, ein- oder mehrfach ungesättigten Alkylrest, einen gesättigten, ein- oder mehrfach ungesättigten Carbo-oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
   - **M**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
   - **n und m**: gleich oder verschieden sind und jeweils im Bereich von 0 bis 10.000 liegen,
   - **t**: 0 oder 1 ist, sofern n= 0, und gleich 1 ist, sofern n # 0, und
   - **X**: für C(Z₂), N(Z), P(Z), P(=O)(Z), O, S, S(=O) oder S(=O)₂ steht, wobei Z in diesen Resten die gleiche Bedeutungen besitzen kann, wie zuvor für die Formel (VI) ausgeführt,
   oder
**(2) in Anwesenheit einer Verbindung ausgewählt aus der Gruppe bestehend aus**
   (i) Mercaptanen, die mindestens eine SH-Gruppe enthalten,
   (ii) Mercaptoalkoholen, die mindestens eine SH-Gruppe und mindestens eine OH-Gruppe enthalten,
   (iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
   (iv) Thiocarbonsäuren,
   (v) Disulfiden, Polysulfiden,
   (vi) Thioharnstoff,
   (vii) Allylverbindungen,
   (viii) Aldehyden,
   (ix) aliphatischen Halogenkohlenwasserstoffen, araliphatischen Halogenkohlen-wasserstoffen und
   (x) Saccharin sowie
   (xi) beliebigen Mischungen von zwei oder mehr der vorgenannten Molekulargewichtsregler (i)-(x).
   **oder**
**(3) in Abwesenheit der Molekulargewichtsregler, die unter Punkt (1) und (2) (i) bis (xi) aufgeführt sind.**

### Ausführungsform (1) der radikalischen Polymetisation in Lösung:

In der Ausführungsvariante (1), die Gegenstand der WO-A-2011/032832 ist, wird mindestens ein Molekulargewichtsregler ("Regler") der allgemeinen Formel (VI) eingesetzt. Die in den Resten Z und R der allgemeinen Formel (VI) genannten Bedeutungen können jeweils ein- oder mehrfach substituiert sein. Bevorzugt weisen die folgenden Reste eine ein- oder mehrfache Substitution auf Alkyl, Carbocyclyl, Heterocyclyl, Aryl, Heteroaryl, Arylalkyl, Heteroarylalkyl, Alkoxy, Aryloxy, Alkylthio, Arylthio, Amino, Amido, Carbamoyl, Phosphonato, Phosphinato, Sulfanyl, Thiocarboxy, Sulfinyl, Sulfono, Sulfino, Sulfeno, Sulfamoyl, Silyl, Silyloxy, Carbonyl, Carboxy, Oxycarbonyl, Oxysulfonyl, Oxo, Thioxo, Borate, Selenate und Epoxy.

Als Substituenten kommen wiederum - soweit sich chemisch stabile Verbindungen ergeben - alle Bedeutungen in Frage, die Z annehmen kann. Besonders geeignet als Substituenten sind Halogen, bevorzugt Fluor, Chlor, Brom oder Iod, Nitril (CN) und Carboxy.

Die für Z und R in der allgemeinen Formel (VI) genannten Bedeutungen schließen explizit auch Salze der genannten Reste ein, soweit diese chemisch möglich und stabil sind. Hierbei kann es sich beispielsweise um Ammonium-Salze, Alkali-Salze, Erdalkali-Salze, Aluminium-Salze oder um protonierte Formen der Regler der allgemeinen Formel (VI) handeln.

Die für Z und R in der allgemeinen Formel (VI) genannten Bedeutungen schließen auch organometallische Reste ein, beispielsweise solche, die dem Regler eine Grignard Funktion verleihen. Z und R können ferner ein Carbanion darstellen bzw. aufweisen mit Lithium, Zink, Zinn, Aluminium, Blei und Bor als Gegenion.

Es ist ferner möglich, dass der Regler über den Rest R über einen Linker an eine Festphase oder Trägersubstanz angekoppelt ist. Bei dem Linker kann es sich um dem Fachmann bekannten Wang-, Sasrin-, Rmk-Säure-, 2-Chlortrityl-, Mannich-, Safety-Catch-, Traceless- oder photolabile Linker handeln. Als Festphasen oder Trägersubstanzen kommen beispielsweise Silica, Ionenaustauscher-harze, Tone (Clay), Montmorillonite, vernetztes Polystyrol, Polyethylenglykol gepfropft auf Polystyrol, Polyacrylamide ("Pepsyn"), Polyethylenglykol-Acrylamid-Copolymere (PEGA), Cellulose, Baumwolle und gekömtes poröses Glas (CPG, controlled pore glass) in Frage.

Es ist ferner möglich, dass die Regler der allgemeinen Formel (VI) als Liganden für metallorganische Komplexverbindungen fungieren, z.B. für solche auf Basis der Zentralmetalle Rhodium, Ruthenium, Titan, Platin, Iridium, Palladium, Rhenium, Ruthenium, Osmium, Kobalt, Eisen oder Kupfer.

Die in der oben genannten allgemeinen Formel (VI) für den Rest "M" aufgeführten Bedeutungen können ein-oder mehrfach substituiert sein. Somit kann es sich bei M um Wiederholungseinheiten eines oder mehrerer, einfach oder mehrfach ungesättigter Monomere handeln, bevorzugt um optional ein- oder mehrfach substituierte konjugierte oder nicht-konjugierte Diene, optional ein- oder mehrfach substituierte Alkine oder optional ein- oder mehrfach substituierte Vinylverbindungen, beispielsweise fluorierte ein- oder mehrfach ungesättigte Vinylverbindungen, oder aber um ein divalentes Strukturelement, welches sich ableitet von substituierten oder unsubstituierten Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide. Hinter diesen Resten "M" kann sich somit ein monomerer oder polymerer Rest verbergen.

Bevorzugt wird ein Regler der allgemeinen Formel (VI) eingesetzt, bei dem
- Z und R: die zuvor für die allgemeine Formel (VI) genannten Bedeutungen besitzen und
- n, m und t: alle gleich Null sind.

Dieser bevorzugte Regler besitzt somit die allgemeine Struktur (VIa): 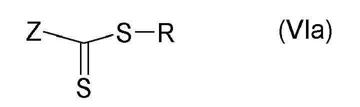 bei dem die Reste Z und R alle zuvor für die allgemeine Formel (VI) genannten Bedeutungen aufweisen können.

### Trithiocarbonate:

Als weiterer bevorzugter Regler kann ein Regler der allgemeinen Formel (VIb) eingesetzt werden, 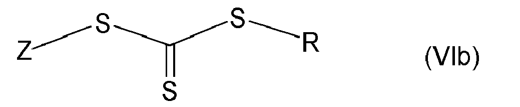 bei dem
- Z: die zuvor für die allgemeine Formel (VI) genannten Bedeutungen besitzt,
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Dieser besonders bevorzugte Regler der allgemeinen Formel (VIb) ergibt sich aus dem Regler der allgemeinen Formel (VI), indem
n und m jeweils = 0 sind,
- t: gleich 1 ist,
- X: für Schwefel steht,
- Z: die zuvor für die allgemeine Formel (VI) genannten Bedeutungen besitzt und
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Bei diesen besonders bevorzugten Reglern der allgemeinen Formel (VIb) handelt es sich somit in Abhängigkeit davon, ob Z und R im Rahmen der vorgegebenen Bedeutungen identisch sind oder nicht, um symmetrische oder asymmetrische Trithiocarbonate.

Besonders bevorzugt wird ein Regler der allgemeinen Formel (VIb) eingesetzt, bei dem
- Z: die zuvor für die allgemeine Formel (VI) genannten Bedeutungen besitzt und
- R: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein-oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

Insbesondere bevorzugt wird ferner ein Regler der allgemeinen Formel (VIb) eingesetzt, bei dem
- Z: die zuvor für die allgemeine Formel (VI) genannten Bedeutungen besitzt, allerdings ebenfalls mit der zusätzlichen Einschränkung auf solche Bedeutungen, dass Z nach homolytischer Spaltung der Z-S Bindung entweder ein sekundäres, tertiäres oder aromatisch stabilisiertes Radikal ausbildet.

Hierbei handelt es sich dann um einen Trithiocarbonat-Regler, bei dem beide Reste R und Z polymerisationsinitüerend wirken.

Ganz besonders bevorzugt wird ferner ein Regler der allgemeinen Formel (VIb) eingesetzt, bei dem
- R und Z: gleich oder verschieden sind und mit der Maßgabe, dass R und Z nach homolytischer Spaltung der R-S bzw. Z-S Bindung jeweils ein sekundäres, tertiäres oder aromatisch stabilisiertes Radikal ausbilden,
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

Bezüglich der für die allgemeine Formel (VIb) und nachfolgend für die allgemeinen Formeln (VIc), (VId) und (VIe) verwendeten Formulierungen, "dass R nach homolytischer Spaltung der R-S-Bindung ein sekundäres oder tertiäres Radikal bildet", gelten die nachfolgenden Definitionen. Diese gelten ebenfalls in analoger Form für die entsprechenden Formulierung "dass Z nach homolytischer Spaltung der Z-S-Bindung ein sekundäres oder tertiäres Radikal bildet", soweit diese im Rahmen der Anmeldung im Zusammenhang mit Z verwendet wird.

Das Atom im Rest R, welches die Bindung an S in der allgemeinen Formel (VIb) bewirkt (bzw. den noch folgenden allgemeinen Formeln (VIc), (VId) und (VIe)), führt bei homolytischer Spaltung der R-S Bindung dann zu einem als "tertiär" zu bezeichnenden Radikal, wenn an dieses Atom (die Bindung zum Schwefel ausgenommen) mindestens
(i) über Einfachbindungen drei Substituenten oder
(ii) über eine Einfachbindung ein Substituent und über eine Doppelbindung ein weiterer Substituent gebunden sind oder
(iii) über eine Dreifachbindung ein Substituent gebunden ist,
   wobei alle vorgenannten Substituenten ungleich Wasserstoff sein müssen.

Das Atom im Rest R, welches die Bindung an S in den allgemeinen Formeln (VIb), (VIc), (VId) und (VIe) bewirkt, führt bei homolytischer Spaltung der R-S Bindung dann zu einem als "sekundär" zu bezeichnenden Radikal, wenn an dieses Atom
(i) über Einfachbindungen zwei Substituenten gebunden sind oder
(ii) über eine Doppelbindung ein Substituent gebunden ist,
   wobei alle vorgenannten Substituenten ungleich Wasserstoff sein müssen und alle weiteren möglichen Substituenten H sind.

Beispiele für Reste R bzw. Z, die bei homolytischer Spaltung der R-S (bzw. Z-S) Bindung zu einem als "tertiär" zu bezeichnenden Radikal führen, sind z.B. tert. Butyl, Cyclohexan-1-nitril-1-yl und 2-Methylpropannitril-2-yl.

Beispiele für Reste R bzw. Z, die bei homolytischer Spaltung der R-S (bzw. Z-S) Bindung zu einem als "sekundär" zu bezeichnenden Radikal führen, sind z.B. sek-Butyl, iso-Propyl und Cycloalkyl, bevorzugt Cyclohexyl.

Bezüglich der nachfolgend für die Formel (VId) verwendeten Maßgabe, "dass Z nach homolytischer Spaltung der Z-S-Bindung ein primäres Radikal bildet", gilt folgende Definition: Das Atom im Rest Z, welches die Bindung an S in der allgemeinen Formel (VId) bewirkt, führt bei homolytischer Spaltung der Z-S Bindung dann zu einem als "primär" zu bezeichnenden Radikal, wenn an dieses Atom über eine Einfachbindung kein oder maximal ein Substituent gebunden ist, der nicht Wasserstoff ist. Für Z = H gilt die og. Maßgabe per Definition als erfüllt.

Beispiele für Reste Z, die bei homolytischer Spaltung der Z-S Bindung zu einem als "primär" zu bezeichnenden Radikal führen, sind somit z.B. H, geradkettige C₁-C₂₀ Alkylreste, OH, SH, SR und C₂-C₂₀ Alkylreste mit Verzweigungen jenseits des C-Atoms, das die Bindung an S bewirkt.

### Dithioester:

Als **weiterer bevorzugter Regler** kann ein Regler der **allgemeinen Formel (VIc)** eingesetzt werden, 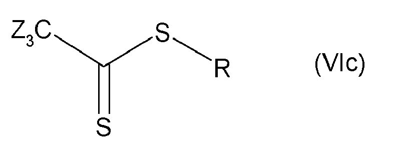
- Z: die zuvor für die allgemeine Formel (VI) genannten Bedeutungen besitzt,
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Dieser besonders bevorzugte Regler der allgemeinen Formel (VIc) ergibt sich aus dem Regler der allgemeinen Formel (VI), wobei
n und m jeweils = 0 sind,
- t: gleich 1 ist,
- X: für C(Z)₂ steht,
- Z: die zuvor für die allgemeine Formel (VI) genannten Bedeutungen besitzt und
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Besonders bevorzugt wird ein Regler der allgemeinen Formel (VIc) eingesetzt, bei dem
- R: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein-oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)Arylrest, inbesondere Phenyl, Pyridinyl oder Anthracenyl,
- für einen (Hetero)Arylalkylrest steht, ganz besonders bevorzugt für einen C₇-C₂₅-(Hetero)Arylalkylrest, insbesondere für Benzyl, Phenylethyl oder 1-Methyl-1-phenyleth-2-yl, oder
- für Thiocarboxy, Carbonyl, Carboxy, Oxo, Thioxo, Epoxy, sowie Salze der genannten Verbindungen steht.

### Asymmetrische Trithiocarbonate:

In einer weiteren bevorzugten Ausführungsform wird mindestens ein Regler der allgemeinen Formel (VId) eingesetzt, 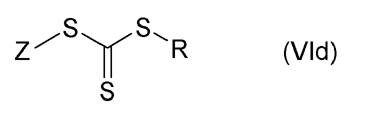 worin
- Z: die zuvor für die allgemeine Formel (VI) genannten Bedeutungen besitzt, allerdings mit der Einschränkung, dass Z nach homolytischer Spaltung der S-Z Bindung ein primäres Radikal ausbildet, und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet, und
mit der zusätzlichen Maßgabe, dass Z und R verschiedene Bedeutungen annehmen.

Dieser bevorzugte Regler der allgemeinen Formel (VId) ergibt sich aus dem Regler der allgemeinen Formel (VI) wobei
n und m jeweils = 0 sind,
- t: gleich 1 ist,
- X: für Schwefel steht,
- Z: die zuvor für die allgemeine Formel (VI) genannten Bedeutungen besitzt, allerdings mit der Einschränkung, dass Z nach homolytischer Spaltung der S-Z Bindung ein primäres Radikal ausbildet, und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Bei diesen besonders bevorzugten Reglern der allgemeinen Formel (VId) handelt es sich somit um asymmetrische Trithiocarbonate.

Besonders bevorzugt wird ein Regler der oben genannten allgemeinen Formel (VId), worin
- **Z**: mit der Maßgabe, dass Z nach homolytischer Spaltung der S-Z Bindung ein primäres Radikal bildet, H, einen linearen oder verzeigten, gesättigten oder ein- oder mehrfach ungesättigten, optional ein-oder mehrfach substituierten Alkylrest, ganz besonders bevorzugt einen entsprechenden C₁-C₁₆ Alkylrest, insbesondere Methyl, Ethyl, n-Prop-1-yl, But-2-en-1-yl, n-Pent-1-yl, n-Hex-1-yl oder n-Dodecan-1-yl, Aralkyl, ganz besonders bevorzugt C₇-C₂₅-Aralkyl, insbesondere Benzyl, Amino, Amido, Carbamoyl, Hydroxyimino, Alkoxy, Aryloxy, F, Cl, Br, I, Hydroxy, Alkylthio, Arylthio, Carbonyl, Carboxy, Oxo, Thioxo, Cyanate, Thiocyanate, Isocyanate, Thioisocyanate, Isocyanide oder Salze der genannten Verbindungen bedeutet und
- **R**: mit der Maßgabe, dass R nach homolytischer Spaltung der S-R Bindung entweder ein sekundäres, tertiäres oder aromatisch stabilisiertes Radikal ausbildet,
- für einen linearen, verzeigten oder cyclischen, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo- oder Heterocyclylrest steht, inbesondere für Cyclohexyl, Cumyl oder Cyclohexan-1-nitril-1-yl,
- für einen Arylrest oder Heteroarylrest steht, ganz besonders bevorzugt für einen C₆-C₂₄-Arylrest, inbesondere Phenyl, Pyridinyl oder Anthracenyl,
- für einen Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

### Dithioester:

In einer weiteren bevorzugten Ausführungsform wird mindestens ein Regler der allgemeinen Formel (VIe) eingesetzt, 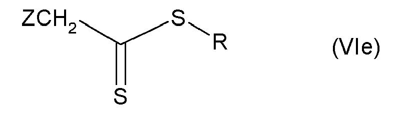 worin
- **Z**: alle für die allgemeine Formel (VI) gennanten Bedeutungen besitzen kann und
- **R**: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Dieser bevorzugte Regler der allgemeinen Formel (VIe) ergibt sich aus dem Regler der allgemeinen Formel (VI), wobei
n und m jeweils = 0 sind,
- t: gleich 1 ist,
- X: für CH₂ steht,
- Z: die zuvor für die allgemeine Formel (VI) genannten Bedeutungen besitzt und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Besonders bevorzugt wird ein Regler der oben genannten allgemeinen Formel (VIe), worin
- **R**: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein-oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)Arylrest, inbesondere Phenyl, Pyridinyl oder Anthracenyl,
- für einen (Hetero)Arylalkylrest steht, ganz besonders bevorzugt für einen C₇-C₂₅-(Hetero)Arylalkylrest, insbesondere für Benzyl, Phenylethyl oder 1-Methyl-1-phenyleth-2-yl, oder
- für Thiocarboxy, Carbonyl, Carboxy, Oxo, Thioxo, Epoxy, sowie Salze der genannten Verbindungen steht.

Alle vorgenannten Regler sind nach Methoden, die dem Fachmann aus dem Stand der Technik geläufig sind, synthetisierbar. Synthesevorschriften und weitere Verweise für Herstellvorschriften können beispielsweise aus Polymer 49 (2008) 1079-1131 sowie allen in dieser Anmeldung als Stand der Technik bereits genannten Schutzrechten und Literaturstellen entnommen werden. Eine Reihe der Regler sind auch bereits käuflich erhältlich.

Besonders geeignet sind als Regler in der Ausführungsform (1) der radikalischen Polymerisation zum Nitrilkautschuk Dodecylpropansäuretrithiocarbonat (DoPAT), Dibenzoyltrithiocarbonat (DiBenT), Cumylphenyldithioacetat (CPDA), Cumyldithiobenzoat, Phenylethyldithiobenzoat, Cyanoisopropyldithiobenzoat (CPDB), 2-Cyanopropyldodecyltrithiocarbonat, 2-Cyanoethyldithiobenzoat, 2-Cyano-prop-2-yl-dithiophenylacetat, 2-Cyanoprop-2-yl-dithiobenzoat, S-Thiobenzoyl-1H,1H, 2-Keto-3-oxa-4H,4H,5H,5H-perfluoroundecanthiol und S-Thiobenzoyl-1-phenyl-2-keto-3-oxa-4H,4H,5H,5H-per-fluoroundecanthiol.

Üblicherweise werden in Ausführungsvariante (1) der radikalischen Polymerisation zum Nitrilkautschuk 5 bis 2000 mol% des Reglers bezogen auf 1 mol des Initiators eingesetzt. Bevorzugt werden 20 bis 1000 mol% des Reglers bezogen auf 1 mol des Initiators eingesetzt.

Die in Ausführungsform (1) der radikalischen Polymerisation zum Nitrilkautschuk einsetzbaren Verbindungen der allgemeinen Formel (VIb) sind aus der sogenannten RAFT-Technologie bekannt.

### Ausführungsvariante (2) der radikalischen Polymerisation zum Nitrilkautschuk:

In Ausführungsvariante (2), die Gegenstand einer noch nicht veröffentlichten europäischen Patentanmeldung mit dem Aktenzeichen 10174654.3 ist, wird mindestens eine Verbindung ausgewählt aus der Gruppe bestehend aus den o.g. Verbindungen (i) bis (xii) eingesetzt.

Bevorzugte **Mercaptane (i)** sind Alkylmercaptane, besonders bevorzugt sind C₁-C₁₆-Alkylmercaptane, die verzweigt oder unverzweigt sein können. Ganz besonders bevorzugt sind Methylmercaptan, Ethylmercaptan, n-Butylmercaptan, n-Hexylmercaptan, n-Octylmercaptan, n-Dodecylmercaptan und tert.-Dodecyhnercaptane. Tert.-Dodecyl-mercaptane können sowohl in Form einzelner Isomere als auch in Form von Gemischen zweier oder mehr Isomere eingesetzt werden.

Bevorzugte **Mercaptoalkohole (ii)** sind aliphatische oder cycloaliphatische Mercaptoalkohole, insbesondere 2-Mercapto-1-ethanol, 3-Mercapto-1-propanol, 3-Mercaptopropan-1,2-diol (auch als Thioglycerin bekannt), 4-Mercapto-1-butanol und 2-Mercaptocyclohexanol.

Bevorzugte **Mercaptocarbonsäuren (iii)** sind Mercaptoessigsäure (auch als Sulfanylessigsäure bezeichnet), 3-Mercaptopropionsäure, Mercaptobutandisäure (auch als Mercaptobernsteinsäure bekannt), Cystein und N-Acetylcystein. Bevorzugte **Mercapto-carbonsäureester (iii)** sind Alkylthioglycolate, insbesondere Ethylhexylthioglycolat.

Eine bevorzugte **Thiocarbonsäure (iv)** ist Thioessigsäure.

Bevorzugte **Disulfide (v)** sind Xanthogendisulfide, besonders bevorzugt ist Diisopropylxanthogendisulfid.

Bevorzugte **Allylverbindungen (vii)** sind Allylalkohol oder Allylchlorid.

Ein bevorzugter **Aldehyd (viii)** ist Crotonaldehyd.

Bevorzugte **aliphatische oder araliphatische Halogenkohlenwasserstoffe (ix)** sind Chloroform, Tetrachlorkohlenstoff, Iodoform oder Benzylbromid.

Die vorgenannten Molekulargewichtsregler sind prinzipiell literaturbekannt (siehe K. C. Berger und G. Brandrup in J. Brandrup, E. H. Immergut, Polymer Handbook, 3. Aufl., John Wiley & Sons, New York, 1989, S. II/81 - II/141) und käuflich erhältlich oder können alternativ nach dem Fachmann aus der Literatur bekannten Verfahren hergestellt werden (siehe z.B. Chimie & Industrie, Vol 90 (1963), No 4, 358-368, US-A-2,531,602, DD 137 307, DD 160 222, US-A-3,137,735, WO-A-2005/082846, GB 823,824, GB 823,823, JP 07-316126, JP 07-316127, JP 07-316128).

Molekulargewichtsregler zeichnen sich dadurch aus, dass sie im Rahmen der Polymerisationsreaktion Kettenübertragungsreaktionen beschleunigen und damit die Herabsetzung des Polymerisationsgrades der resultierenden Polymeren bewirken. Die zuvor genannten Regler umfassen mono-, bi- oder polyfunktionale Regler, je nach Anzahl der funktionellen Gruppen im Molekül, die zu einer oder mehreren Kettenübertragungsreaktionen führen können.

Besonders bevorzugt handelt es sich bei dem im erfindungsgemäßen Verfahren einzusetzenden Molekulargewichtsregler um tert.-Dodecylmercaptane, sowohl in Form einzelner Isomere als auch in Form von Gemischen von zwei oder mehr Isomeren.

Tert.-Dodecymercaptane werden oft durch sauer katalysierte Addition von Schwefelwasserstoff an Olefine mit 12 Kohlenstoffen hergestellt. Als C₁₂-Olefin Ausgangsmaterial (auch als "C₁₂-Feed-stock" bezeichnet) werden überwiegend Oligomerengemische auf der Basis von tetramerisiertem Propen (auch "Tetrapropen" oder "Tetrapropylen" genannt), trimerisiertem Isobuten (auch "Triiso-buten" oder "Triisobutylen" genannt), trimerisiertem n-Buten und dimerisiertem Hexen verwendet.

Ganz besonders bevorzugt werden im erfindungsgemäßen Verfahren als Molekulargewichtsregler ein oder mehrere tert-Dodecylmercaptane ausgewählt aus der Gruppe bestehend aus 2,2,4,6,6-Pentamethylheptanthiol-4, 2,4,4,6,6-Pentamethylheptanthiol-2, 2,3,4,6,6-Pentamethylheptanthiol-2, 2,3,4,6,6-Pentamethylheptanthiol-3 und beliebigen Mischungen von zwei oder mehr der vorgenannten Isomere eingesetzt.

Insbesondere wird in Variante (2) der radikalischen Polymerisation zum Nitrilkautschuk ein Gemisch eingesetzt, das 2,2,4,6,6-Penta-methylheptanthiol-4, 2,4,4,6,6-Pentamethylheptanthiol-2, 2,3,4,6,6-Pentamethylheptanthiol-2 und 2,3,4,6,6-Pentamethylheptanthiol-3 enthält. Die Herstellung dieses Gemischs ist in EP-A-2 162 430 beschrieben.

Üblicher Weise werden in Variante (2) des erfindungsgemäßen Verfahrens 1 bis 5000 mol% des Molekulargewichtsreglers (i) bis (ix) bezogen auf 1 mol Initiator eingesetzt. Bevorzugt werden 5 bis 2000 mol% des Molekulargewichtsreglers bezogen auf 1 mol des Initiator eingesetzt.

### Ausführungsvariante (3) der radikalischen Polymerisation zum Nitrilkautschuk:

In Ausführungsvariante (3), die Gegenstand einer noch nicht veröffentlichten europäischen Patentanmeldung mit dem Aktenzeichen 10174665.9 ist, kann die Polymerisation zum Nitrilkautschuk in mindestens einem Lösungsmittel auch in Abwesenheit jeglicher Verbindungen durchgeführt werden, die für Ausführungsformen (1) sowie (2) definiert als Verbindungen (i) bis (xi) eingesetzt werden.

### Initiatoren der radikalischen Polymerisation zum Nitrilkautschuk:

Auf welche Weise die radikalische Polymerisation zum Nitrilkautschuk initiiert wird, ist nicht kritisch. Möglich ist eine Initiierung durch peroxidische Initiatoren, Azo-Initiatoren, Redox-Systeme oder auf photochemischem Weg. Bevorzugt sind Azo-Initiatoren.

Als **Azo-Initiatoren** können beispielsweise die folgenden Verbindungen eingesetzt werden: 2,2'-Azobis(isobutyronitril), 2,2'-Azobis(2-cyano-2-butan), Dimethyl-2,2'-azobisdimethyl-iso-butyrat, 4,4'-Azobis(4-cyanopentansäure), 2-(t-Butylazo)-2-cyanopropan, 2,2'-Azobis[2-methyl-N-(1,1)-bis(hydroxymethyl)-2-hydroxyethyl] propionamid, 2,2'-Azobis[2-methyl-N-hydroxyethyl]-propionamid, 2,2'-Azobis(N,N-dimethylenisobutyr-amidine) dihydrochlorid, 2,2'-Azobis(2-amidinopropan)dihydrochlorid, 2,2'-Azobis(N,N'-dimethylenisobutyramin), 2,2'-Azobis(2-methyl-N-[1,1-bis(hydroxymethyl)-2-hydroxyethyl] propionamid), 2,2'-Azo-bis(2-methyl-N-[1,1-bis(hydroxymethyl)ethyl]propionamid), 2,2'-Azobis[2-methyl-N-(2-hy-droxyethyl) propionamid], 2,2'-Azobis(isobutyramid)dihydrat, 2,2'-Azobis(2,2,4-tri-methyl-pentan) 2,2'-Azobis(2-methylpropan), 1,1'-Azobis(cyclohexan-1-carbonitril), 2,2'-Azobis[N-(2-propenyl)-2-methylpropionamid], 1-[(1-Cyano-1-methylethyl)azo]formamid, 2,2'-Azobis (N-butyl-2-methylpropionamid), 2,2'-Azobis-(N-cyclohexyl-2-methylpropionamid) und 2,2'-Azobis(2,4,4-trimethylpentan).

Üblicherweise werden die Azo-Initiatoren in einer Menge von 10⁻⁴ bis 10⁻¹ mol/l, bevorzugt 10⁻³ bis 10⁻² mol/l eingesetzt. Durch Abstimmung des Verhältnisses der eingesetzten Initiatormenge zur Menge des verwendeten Reglers gelingt es, sowohl die Reaktionskinetik als auch die Molekularstruktur (Molekulargewicht, Polydispersität) gezielt zu beeinflussen.

Als **peroxidische Initiatoren** können z.B. die folgenden Peroxo-Verbindungen, die eine -O-O-Einheit aufweisen, eingesetzt werden: Wasserstoffperoxid, Peroxodisulfate, Peroxo-diphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid, Pinanhydroperoxid und p-Menthanhydroperoxid. Geeignete Peroxide mit zwei organischen Resten sind Dibenzoylperoxid, 2,4-Dichlorbenzoylperoxid, 2,5-Dimethylhexan-2,5-di-t.butylperoxid, Bis-(t-butylperoxy-isopropyl)benzol, t-Butylcumylperoxid, Di-t-butylperoxid, Dicumylperoxid, t-Butylperbenzoat, t-Butylperacetat, 2,5-Dimethylhexan-2,5-diperbenzoat, t-Butyl-per-3,5,5-trimethylhexanoat und 1,1-Bis(tert-butylperoxy)-3,5,5-trimethylcyclohexan. Bevorzugt wird p-Menthanhydroperoxid, Cumolhydroperoxid, Pinanhydroperoxid oder 1,1-Bis(tert-butylperoxy)-3,5,5-trimethylcyclohexan eingesetzt.

Hierbei hat es sich bewährt, den Azoinitiator bzw. den peroxidischen Initiator so zu wählen, dass bei einer Temperatur von 20°C bis 200 °C, bevorzugt 45°C bis 175°C, besonders bevorzugt 50°C bis 160°C und insbesondere 85°C bis 150°C, die Halbwertszeit des jeweiligen Initiators im gewählten Lösungsmittel 10 Stunden oder mehr als 10 Stunden beträgt. Bevorzugt sind dabei Azoinitatoren, die bei einer Temperatur von 20°C bis 200 °C, bevorzugt 80°C bis 175°C, besonders bevorzugt 45°C bis 160°C und ganz besonders bevorzugt 50°C bis 150°C, eine Halbwertszeit von 10 Stunden oder mehr als 10 Stunden im gewählten Lösungsmittel besitzen.

In einer Ausführungsform werden Azoinitatoren der folgenden Strukturformeln (Ini-1) bis (Ini-6) eingesetzt:

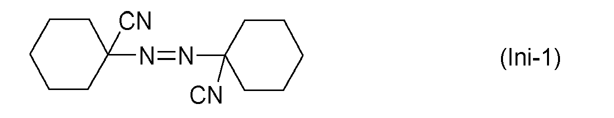

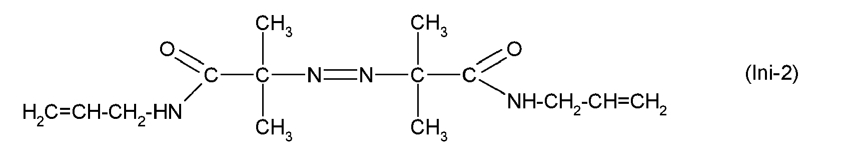

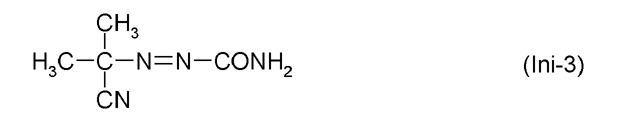

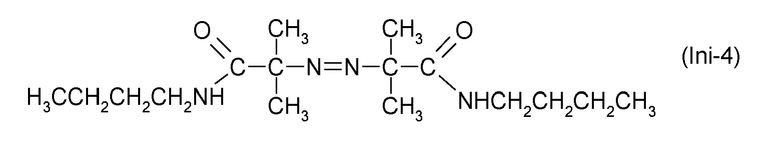

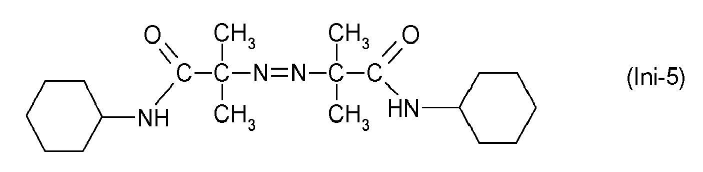

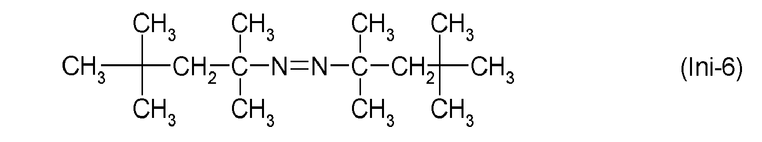

Ganz besonders bevorzugt ist der Einsatz der Initiatoren der Formel (Ini-2) und (Ini-3). Die vorgenannten Azoinitiatoren der Strukturformeln (Ini-1) bis (Ini-6) sind käuflich erhältlich, beispielsweise von Wako Pure Chemical Industries, Ltd..

Der Begriff der Halbwertszeit ist dem Fachmann im Zusammenhang mit Initiatoren geläufig. Nur als Beispiel: Eine Halbwertszeit von 10 Stunden in einem Lösungsmittel bei einer bestimmten Temperatur bedeutet konkret, dass sich unter diesen Bedingungen nach 10 Stunden die Hälfte des Initiators zersetzt hat.

Bei Einsatz der vorgenannten bevorzugten Initiatoren mit einer höheren Zerfallstemperatur, insbesondere der genannten Azoinitiatoren lassen sich Nitrilkautschuke mit vergleichsweise höheren mittleren Molekulargewichten M_{w} (Gewichtsmittel des Molekulargewichts) und Mₙ (Zahlenmittel des Molekulargewichts) synthetisieren, die sich gleichzeitig weiterhin durch eine hohe Linearität auszeichnen. Dies kommt zum Ausdruck durch entsprechend niedrige Werte der Mooney-Relaxation, gemessen durch IS0289 Teil 1 &2 oder alternativ nach ASTM D1646.

Als **Redox-Systeme** können die folgenden Systeme aus einem Oxidationsmittel und einem Reduktionsmittel eingesetzt werden. Die Wahl geeigneter Mengen an Oxidations- und Reduktionsmittel ist dem Fachmann hinreichend geläufig.

Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamintetraacetat, Natrium-Nitrilotriacetat sowie Trinatriumphosphat oder Tetrakaliumdiphosphat.

Als **Oxidationsmittel** können dabei beispielsweise alle Peroxoverbindungen, die zuvor für die **peroxidischen Initiatoren** genannt wurden, eingesetzt werden.

Als **Reduktionsmittel** können im erfindungsgemäßen Verfahren beispielsweise die folgenden eingesetzt werden: Natriumformaldehydsulfoxylat, Natriumbenzaldehydsulfoxylat, reduzierende Zucker, Ascorbinsäure, Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Bevorzugt wird Natriumformaldehydsulfoxylat eingesetzt.

Die Initiierung der radikalischen Polymerisation kann auch **photochemisch** wie im Folgenden beschrieben erfolgen: Hierzu wird dem Reaktionsgemisch ein Photoinitiator zugesetzt, welcher durch Bestrahlung mittels Licht geeigneter Wellenlänge angeregt wird und eine radikalische Polymerisation initiiert. Es ist hierbei anzumerken, dass für die optimale Initiierung der radikalischen Polymerisation die Bestrahlungsdauer von der Leistung des Strahlers, von dem Abstand zwischen dem Strahler und dem Reaktionsgefäß sowie von der Bestrahlungsfläche abhängig ist. Es ist jedoch für den Fachmann ohne weiteres durch verschiedene Testreihen möglich, die optimale Bestrahlungsdauer herauszufinden. Auch die Wahl der geeigneten Inititatormenge ist für den Fachmann ohne Probleme möglich und dient zur Beeinflussung des Zeit-Umsatz-Verhaltens der Polymerisation.

Als photochemische-Initiatoren können beispielsweise die Folgenden eingesetzt werden: Benzophenon, 2-Methylbenzophenon, 3,4-Dimethylbenzophenon, 3-Methylbenzophenon, 4,4'-Bis(diethylamino)benzophenon, 4,4'-Di-hydroxybenzophenon, 4,4'-Bis[2-(1-propenyl) phenoxy]benzophenon, 4-(Diethylamino)benzophenon, 4-(Dimethylamino) benzophenon, 4-Benzoylbiphenyl, 4-Hydroxybenzophenon, 4-Methylbenzophenon, Benzophenon-3,3',4,4'-tetracarboxyldianhydrid, 4,4'-Bis(dimethylamino)benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methylpropiophenon, 3'-Hydroxyacetophenon, 4'-Ethoxyacetophenon, 4'-Hydroxyacetophenon, 4'-Phenoxyacetophenon, 4'-*tert*-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4,6-trimethylbenzoyl)phosphinoxid, Methylbenzoyl-format, Benzoin, 4,4'-Dimethoxybenzoin, Benzoinmethylether, Benzoinethylether, Benzoinisopropylether, Benzoinisobutylether, 4,4'-Dimethylbenzil, Hexachlorocyclopentadiene oder Kombinationen daraus.

### Temperatur der radikalischen Polymerisation:

Die radikalische Polymerisation wird üblicher Weise bei einer Temperatur in einem Bereich von 5°C bis 150°C durchgeführt, bevorzugt in einem Bereich von 8°C bis 130°C, besonders bevorzugt in einem Bereich von 9°C bis 120°C und ganz besonders bevorzugt in einem Bereich von 10°C bis 110°C. Insbesondere bei Anwendung einer Temperatur im Bereich von 40°C bis 110°C und noch ausgeprägter im Bereich von 60 bis 110°C ist eine deutliche Bildung von Diels-Alder Nebenprodukten der Monomere zu beobachten. Wird die Temperatur noch tiefer gewählt, ist die Polymerisation entsprechend verlangsamt. Bei noch deutlich höheren Temperaturen oberhalb von 150°C ist es nicht ausgeschlossen, dass der eingesetzte Initiator zu schnell zerfällt bzw. das RAFT-Agens bei Ausführungsform (1) zersetzt wird. Insbesondere beim Einsatz peroxidischer Initiatoren ist es ferner nicht ausgeschlossen, dass es u.U. zur Oxidation des Reglers kommt.

### Polymerisation:

Im Fall der Initiierung durch Peroxoverbindungen oder Azo-Initiatoren erfolgt die Durchführung des radikalischen Polymerisation zum Nitrilkautschuk üblicherweise so, dass das α,β-ungesättigte Nitril und die optional eingesetzten weiteren copolymerisierbaren Monomere, das Lösungsmittel, der Initiator sowie der/die Regler in einem Reaktionsgefäß vorgelegt werden und anschließend das oder die konjugierte Diene zudosiert wird/werden. Die Polymerisation wird im Anschluss durch Temperaturerhöhung gestartet.

Im Falle einer Initiierung mittels eines Redox-Systems wird typischerweise das Oxidationsmittel zusammen mit einem der Monomeren in das Reaktionsgefäß dosiert. Die Polymerisation wird im Anschluss durch Zusatz des Reduktionsmittels gestartet.

Um spezielle Verhältnisse der jeweiligen Monomeren im Co-/Terpolymer zu erhalten, ist es sinnvoll und dem Fachmann durchweg geläufig, entsprechende Modifikationen bezüglich der Dosierung vorzunehmen (z.B. durch Nachdosieren von Monomeren, Initiator, Regler oder Lösungsmittel). Diese Nachdosierungen können dabei entweder kontinuierlich oder aber auch in einzelnen Portionen diskontinuierlich erfolgen.

Zur Einstellung eines geeigneten Molekulargewichts sowie zwecks Erreichen des gewünschten Umsatzes hat es sich in einer Ausführungsform des erfindungsgemäßen Verfahrens bewährt, sowohl den Initiator als auch Lösungsmittel im Verlauf der Polymerisationsreaktion ein- oder mehrmals nachzudosieren.

### Nitrilkautschuke:

**Bei Ausführungsvariante (1)** zeichnen sich die erhaltenen Nitrilkautschuke durch ein oder mehrere Strukturelemente der allgemeinen Formeln (I), (II), (III), (IV) oder (V) entweder in der Polymerhauptkette oder als Endgruppen aus. Derartige Nitrilkautschuke können aufgrund dieser Strukturelemente/ Endgruppen Folgeumsetzungen mit anderen polymerisierbaren Monomeren unterworfen werden, da die Strukturelemente/Endgruppen über eine weitere Fragmentierung als RAFT Agenzien fungieren können. Auf diesem Weg wird der gezielte Aufbau verschiedenster Polymerarchitekturen möglich. Darüberhinaus lassen sich diese Nitrilkautschuke später auch einfacher vernetzen als herkömmliche Nitrilkautschuke, da die Strukturelemente/Endgruppen den üblichen Vernetzungsagenzien, insbesondere denen auf Schwefelbasis strukturell ähnlich sind. Insofern kann eine ausreichende Vemetzungsdichte mit den Nitrilkautschuken bereits mit einer geringeren Menge an Vernetzer erreicht werden. Zudem wird durch die Vernetzung über die Endgruppen die Zahl loser Polymerkettenenden im Vulkanisat verringert, wodurch es zu verbesserten Eigenschaften wie z.B. den dynamischen Eigenschaften kommt.

Diese Nitrilkautschuke enthalten
(i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren sowie
(ii) ein oder mehrere Strukturelemente der allgemeinen Formeln (I), (II), (III), (IV) oder (V) 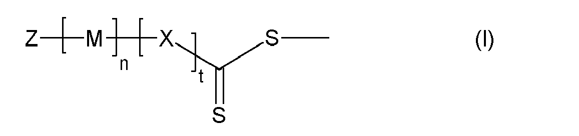 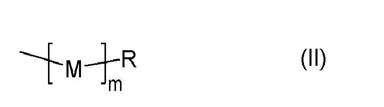 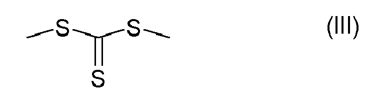 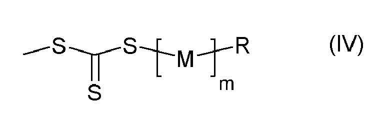 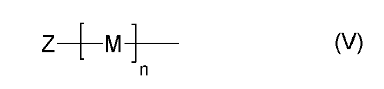 wobei
   - Z: für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
   - **M**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
   - **n und m**: gleich oder verschieden sind und jeweils im Bereich von 0 bis 10.000 liegen,
   - **t**: 0 oder 1 ist, sofern n= 0, und gleich 1 ist, sofern n ≠ 0,
   - **X**: für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt und
   - **R**: **(a)** für den Fall, dass m ≠ 0 ist, die gleichen Bedeutungen besitzen kann wie der Rest Z und (b) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht.

Die in den vorgenannten Resten Z und R genannten Bedeutungen können jeweils ein- oder mehrfach substituiert sein. Hier gilt identisch das bereits für die allgemeine Formel (VI) zu Z und R ausgeführte. Auch die zur allgemeinen Formel (VI) gemachten Ausführungen bezüglich des Einschluss einiger Bedeutungen für Z und R (in Form von Salzen der genannten Reste, von organometallischen Salzen, als Liganden für metallorganische Komplexverbindungen sowie die Anbindung über Linker an Festphasen bzw. Trägersubstanzen) gelten identisch für Z und R in den allgemeinen Strukturelementen (I)-(V). Auch die Ausführungen zur allgemeinen Formel (VI) bezüglich der optionalen Substitution der sich hinter M verbergenden Bedeutungen gilt identisch für das allgemeine Strukturelement (I), (II), (IV) und (V).

Bevorzugt lassen sich über Ausführungsvariante (2) gegebenenfalls hydrierte Nitrilkautschuke erhalten, die Strukturelemente (ii) der allgemeinen Formeln (VIb-1) und (VIb-2) aufweisen, 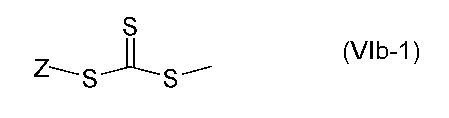 und

-R (VIb-2)

worin
- Z: die zuvor für die allgemeine Formel (I) genannten Bedeutungen besitzt und
- R: die zuvor für die allgemeine Formel (I) genannten Bedeutungen besitzt, allerdings mit der Einschränkung, dass R nach homolytischer Spaltung der Bindung zum nächsten gebundenen Atom im Nitrilkautschuk entweder ein sekundäres, tertiäres oder aromatisch stabilisiertes Radikal ausbildet.

Es hat sich insbesondere bewährt, dass Z und R hierbei verschieden sind.

Diese Strukturelemente sind in den Nitrilkautschuken als Endgruppen enthalten und ergeben sich bei Einsatz der bevorzugten Regler der allgemeinen Formel (VIb).

In einer bevorzugten Ausführungsform nach Variante (1) werden Nitrilkautschuke erhalten, die als allgemeine Strukturelemente (ii) die Endgruppe n(VIb-1) und (VIb-2) enthalten, worin R mit der Maßgabe, dass R nach homolytischer Spaltung der Bindung zum nächsten gebundenen Atom entweder ein sekundäres, tertiäres oder aromatisch stabilisiertes Radikal ausbildet,
- für einen linearen oder verzweigten, gesättigten oder ein- oder mehrfach ungesättigten, optional ein-oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H, 1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

In einer besonders bevorzugten Ausführungsform nach Variante (1) werden gegebenenfalls hydrierte Nitrilkautschuke erhalten, die als allgemeine Strukturelemente (ii) 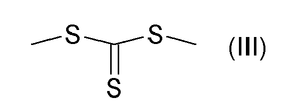 und —R (II') und/oder —Z (I')
aufweisen, wobei
- Z: die gleichen Bedeutungen aufweisen kann wie in der allgemeinen Formel (I) und
- R: die gleichen Bedeutungen aufweisen kann wie in der allgemeinen Formel (II) für m=0, und
- R und Z: gleich oder verschieden sind, allerdings jeweils mit der Maßgabe, dass R und Z nach homolytischer Spaltung ihrer Bindung zum jeweils nächsten Atom im optional hydrierten Nitrilkautschuk jeweils ein sekundäres, tertiäres oder aromatisch stabilisiertes Radikal ausbilden.

Gegebenenfalls hydrierte Nitrilkautschuke mit den vorgenannten allgemeinen Strukturelementen (ii) werden erhalten, wenn als Regler eine Verbindung der allgemeinen Strukturformel (VIb) eingesetzt wird, worin Z die gleichen Bedeutungen besitzt wie in der allgemeinen Formel (VI) und R die gleichen Bedeutungen besitzt wie in der allgemeinen Formel (VI) für die Variante b) mit m=0, und R und Z gleich oder verschieden sind, allerdings jeweils mit der Maßgabe, dass R und Z nach homolytischer Spaltung ihrer Bindung zum nächstgelegenen Schwefel im Regler jeweils ein sekundäres, tertiäres oder aromatisch stabilisiertes Radikal ausbilden.

In einer weiteren besonders bevorzugten Ausführungsform nach Variante (1) werden Nitrilkautschuke erhalten, die als allgemeinen Strukturelemente (ii) die Elemente (III) und (II') und/oder (I') enthalten, worin
- R und Z: gleich oder verschieden sind und mit der Maßgabe, dass R und Z nach homolytischer Spaltung der Bindung zum jeweils nächsten gebundenen Atom jeweils ein sekundäres, tertiäres oder aromatisch stabilisiertes Radikal ausbilden,
- für einen linearen oder verzweigten, gesättigten oder ein- oder mehrfach ungesättigten, optional ein- oder mehrfach substituierten Alkylrest stehen, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest stehen, inbesondere für Cyclohexyl, Cumyl oder Cyclohexan-1-nitril-1-yl,
- für einen (Hetero)Arylrest stehen, ganz besonders bevorzugt für einen C₆-C₂₄-(Hetero)arylrest, inbesondere für Phenyl, Pyridinyl oder Anthracenyl,
- für einen (Hetero)Aralkylrest stehen, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

In einer weiteren besonders bevorzugten Ausführungsform nach Variante (1) werden Nitrilkautschuke erhalten, die als allgemeine Strukturelemente (ii) 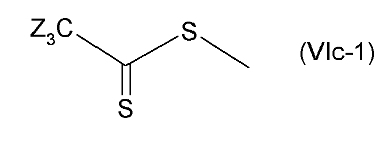 und

-R (VIc-2)

enthalten, worin
- Z: die zuvor für die allgemeine Formel (I) genannten Bedeutungen besitzt,
- R: die zuvor für die allgemeine Formel (II) genannten Bedeutungen besitzt, allerdings mit der Einschränkung, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.

Diese Strukturelemente sind in den Nitrilkautschuken als Endgruppen enthalten und ergeben sich bei Einsatz der bevorzugten Regler der allgemeinen Formel (VIc).

In einer weiteren besonders bevorzugten Ausführungsform nach Variante (1) werden gegebenenfalls hydrierte Nitrilkautschuke erhalten, die als allgemeine Strukturelemente (ii) die Strukturelemente (VIc-1) und (VIc-2) enthalten, worin
- R: mit der Maßgabe, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.,
- für einen linearen oder verzweigten, gesättigten oder ein- oder mehrfach ungesättigten, optional ein- oder mehrfach substituierten Alkylrest steht, bevorzugt für einen ent-sprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

**Bei Ausführungsvariante (2)** zeichnen sich die erhaltenen Nitrilkautschuke durch ein oder mehrere Strukturelemente entweder in der Polymerhauptkette oder als Endgruppen aus, die durch Einbau und/oder Reaktion eines der für Variante (2) definierten Molekulargewichtsreglers (i) bis (x) mit den gebildeten Polymerketten entstehen.

**Bei allen drei Ausführungsvarianten (1)** - (3) zeichnen sich die erhaltenen Nitrilkautschuke dadurch aus, dass sie im Gegensatz zu entsprechenden Kautschuken, die gemäß dem Stand der Technik über die Emulsionspolymerisation erhalten werden, vollkommen emulgatorfrei sind und auch keine Salze enthalten, wie sie üblicherweise zur Koagulation der Latices nach der Emulsionspolymerisation zwecks Ausfällung des Nitrilkautschuks eingesetzt werden. Sie enthalten jedoch die weiter oben in dieser Anmeldung bereits beschriebenen Diels-Alder-Nebenprodukte

### Ultrafiltration:

Für das erfindungsgemäße Verfahren wird eine Lösung des verunreinigten Nitrilkautschuks in einem organischen Lösungsmittel eingesetzt. Als organische Lösungsmittel können verschiedenste organische Lösungsmittel oder Gemische von zwei oder mehr Lösungsmitteln verwendet werden. Vorteilhafterweise sollte sich der zu reinigende Nitrilkautschuk bei den jeweils gewählten Verfahrensbedingungen mit >90 Gew.-% lösen. Bevorzugte Lösungsmittel sind aromatische, aliphatische und/oder chlorierte Lösungsmittel sowie Ketone und cyclische Ether. Besonders bevorzugt sind Dimethylacetamid, Ethylacetat, 1,4-Dioxan, Acetonitril, tert.-Butanol, tert.-Butylnitril, Dimethylcarbonat, Methylacetat, Isobutyronitril, Aceton, Toluol, Benzol, Chlorbenzol, Chloroform, Methylenchlorid, Methylethylketon, Tetrahydrofuran oder Gemische von zwei oder mehr dieser Lösungsmittel.

Das erfindungsgemäße Verfahren erlaubt es, den durch radikalische Polymerisation in mindestens einem organischen Lösungsmittel erhaltenen durch Diels-Alder Nebenprodukte verunreinigten Nitrilkautschuk ohne weitere Isolierung unmittelbar der Ultrafiltration zu unterwerfen. In einer besonderen Ausführungsform ist es dabei möglich, vor Durchführung des erfindungsgemäßen Verfahrens die nicht umgesetzten Monomere aus der Lösung des verunreinigten Nitrilkautschuks zu entfernen. Bevorzugt geschieht dies durch Strippen. Es ist auch möglich, den durch Polymerisation in organischer Lösung erhaltenen verunreinigten Nitrilkautschuk zunächst zu isolieren und anschließend erneut in mindestens einem organischen Lösungsmittel zu lösen und der erfindungsgemäßen Ultrafiltration zu unterziehen. Diese Alternative bewährt sich dann, wenn die Ultrafiltration in einem anderen organischen Lösungsmittel durchgeführt werden soll als die vorhergehende Lösungspolymerisation. Es kann auch sinnvoll sein, den einzusetzenden Nitrilkautschuk vor der Ultrafiltration einer Filtration zu unterziehen.

Zwecks Ultrafiltration wird die Lösung des ungereinigten Nitrilkautschuks bei einer Temperatur im Bereich von 10 bis 150°C und unter Anwendung eines Druckes im Bereich von 1 bis 80 bar ein oder mehrmals über eine Ultrafiltrationsmembran geleitet. Dabei wird ein nicht die Ultratfiltrations-membran durchströmender, den gereinigten Nitrilkautschuk enthaltender Retentatstrom erhalten sowie ein die Ultrafiltrationsmembran durchströmender, Diels-Alder-Nebenprodukte enthaltender Permeatstrom, wobei die Strömungsgeschwindigkeit des Retentatstroms während der Ultrafiltration auf einen Wert größer 0,2 m/sec eingestellt wird. Das ein- oder mehrfache Überleiten der Lösung über eine Ultrafiltrationsmembran wird auch als ein- oder mehrfache "Überströmung" der Membran bezeichnet. Die Ultratfiltrationsmembran muss mindestens eine semipermeable Membran aufweisen, die durchlässig ist für das/die Lösungsmittel sowie die darin enthaltenen Diels-Alder Nebenprodukte, jedoch undurchlässig für den Nitrilkautschuk. Es wird somit ein Diels-Alder Nebenprodukte haltiger Permeatstrom erhalten sowie ein Retentatstrom, der den gereinigten Nitrilkautschuk mit einem um mindestens 50 Gew.% verringerten Gehalt an Diels-Alder Nebenprodukte enthält. Mit jeder Überströmung wird der Gehalt an Diels-Alder Nebenprodukten im Retentatstrom verringert. Das mit dem Permeatstrom abgetrennte Volumen an Lösungsmittel wird üblicherweise durch Zugabe frischen Lösungsmittels zum Retentatstrom wieder aufgefüllt, wenn eine Aufkonzentrierung des Retentatstroms vermieden werden soll. Durch die Wahl der Anzahl der Überströmungen und der Menge des ausgetauschten Lösungsmittels kann die Restkonzentration der Diels-Alder-Nebenprodukte im gereinigten Nitrilkautschuk eingestellt werden. Die Abreicherung der Diels-Alder Nebenprodukte wird unter diesen Bedingungen durch ihre Rückhaltung und den Diafiltrationskoeffizienten (Mengenverhältnis Permeat zu Retentat) bestimmt.

Das erfindungsgemäße Verfahren kann sowohl diskontinuierlich als auch kontinuierlich durchgeführt werden. In einer bevorzugten Ausführungsform wird das erfindungsgemäße Verfahren diskontinuierlich durchgeführt. Diskontinuierlich bedeutet dabei, dass die ursprünglich eingesetzte Lösung des ungereinigten Nitrilkautschuks der Ultrafiltration mittels der gewünschten Zahl von Überströmungen unterzogen wird, ohne dass dem Retentatstrom im Verlauf der Durchgänge eine weitere Menge Lösung des ungereinigten Nitrilkautschuks zugesetzt wird.

Üblicherweise wird die Ultrafiltration im erfindungsgemäßen Verfahren bei einer Temperatur im Bereich von 10°C bis 150°C, vorzugsweise im Bereich von 20°C bis 130°C und bei einem Druck im Bereich 1 bis 80 bar, vorzugsweise im Bereich von 2 bar bis 50 bar durchgeführt.

Im erfindungsgemäßen Verfahren soll die Strömungsgeschwindigkeit des Retentatstroms an der Membran vorbei 0,2 m/sec nicht unterschreiten, da sonst bei höheren Konzentrationen des Nitrilkautschuks im Lösungsmittel, insbesondere einer Konzentration größer 3 Gew.-%, eine sogenannte Konzentrationspolarisation eintreten kann, wodurch die Permeatflussrate sinkt. Bevorzugt sind Strömungsgeschwindigkeiten im Bereich von 1 bis 10 m/sec, besonders bevorzugt 2 bis 10 m/sec.

Die Konzentration des Nitrilkautschuks in der durch Ultrafiltration zu behandelnden Lösung von Nitrilkautschuk, Diels-Alder-Nebenprodukten und optional weiteren störenden Substanzen liegt typischerweise bei bis zu 40 Gew.%, bezogen auf die Summe aus Lösungsmittel(n), Nitrilkautschuk, Diels-Alder-Nebenprodukten und optional weiteren störenden Substanzen. Wird eine höhere Konzentration gewählt, so steigt die Viskosität zu stark. Diese wiederum hängt vom Molekulargewicht und der Monomerzusammensetzung des Nitrilkautschuks ab. Eine gewisse Reduktion der Viskosität der Nitrilkautschuklösung ist durch ein Erwärmen der Polymerlösung möglich. Die Konzentration des Nitrilkautschuks in der durch Ultrafiltration zu behandelnden Lösung liegt bevorzugt im Bereich von 5 bis 20 Gew.%.

### Definition der Ultrafiltrationsmembran:

Die im erfindungsgemäßen Verfahren einzusetzende Ultrafiltrationsmembran weist ein oder mehrere Schichten auf, wobei die Schicht mit den kleinsten Poren einen Porendurchmesser im Bereich von 1-200 nm besitzen muss. Bevorzugt ist eine Ultrafiltrationsmembran, die mindestens eine hochporöse, permeable Außenschicht und ein oder mehrere feine poröse Innenschichten aufweist, von denen diejenige mit den kleinsten Poren einen Porendurchmesser im Bereich von 1 bis 200 nm hat. Die hochporöse(n) Außenschicht(en) fungiert/fungieren vor allem als Stützschicht und können ein Gewebe oder Vlies oder einen keramischen Grundkörper darstellen. Unter hochporös ist ein Porendurchmesser der Außenschicht(en) im Bereich von üblicherweise größer 500 nm zu verstehen. Die Innenschicht(en) ist/sind üblicherweise feiner porös als die jeweilige(n) Außenschicht(en). Die Innenschichten sind auf den Außenschichten aufgebrachte symmetrische oder asymmetrischen Membranen, die z.B. aus geeigneten Polymeren oder einer weiteren feinen porösen keramischen Schicht aufgebaut sein können. Die Porendurchmesser der Innenschichten können auch noch von außen nach innen kontinuierlich kleiner werden. Die Porengröße der am feinsten porösen Schicht liegt im Bereich von 1 nm bis 200 nm, bevorzugt im Beeich von 1 bis 100 nm und besonders bevorzugt im Bereich von 1 bis 50 nm. Die Porengrößen können mit den dem Fachmann bekannten Methoden bestimmt werden. Die Trenngrenze einer solchen eingesetzten Ultrafiltrationsmembran liegt somit im Bereich von 1 bis 200 nm, bevorzugt im Bereich von 1 bis 100 nm und besonders bevorzugt im Bereich von 1 bis 50 nm. Zusätzlich kann die Ultrafiltrationsmembran eine dünne Schicht auf der Oberfläche aufweisen, die gegebenenfalls ionische Gruppen enthält.

Geeignete Membranpolymere sowohl für die Außen- als auch für die Innenschicht(en) sind Polysulfone, Polyethersulfone, Polyamide, Polyetherketone, Polyharnstoffe, Polyurethane, Polyvinylidendifluorid, Celluloseacetate, Cellulosenitrate, Polycarbonate, Polyacrylnitril und Polyepoxide. Auch keramische Baustoffe können als Membranen verwendet, beispielsweise auf Basis von zum Teil gemischten Oxiden, Carbonaten, Carbiden und Nitriden der Elemente Aluminium, Antimon, Barium, Beryllium, Bismut, Bor, Hafnium, Kobalt, Mangan, Magnesium, Nickel, Silizium, Thorium, Titan, Wolfram und Zirkonium.

Die Ultrafiltrationsmembran ist üblicherweise Teil eines Membranmoduls. Hier kommen alle handelsüblichen Typen in Betracht, die dem Fachmann bekannt sind. Bevorzugt werden Plattenmodule, Wickelmodule, Rohrmodule, Kapillarmodule und Multikanalmodule, welche gegebenenfalls durch integrierte Strömungsbrecher unterstützt werden können.

Durch das erfindungsgemäße Verfahren können schrittweise die Diels-Alder-Nebenprodukte entfernt werden, aber auch unterschiedliche Konzentrationen dieser Diels-Alder-Nebenprodukte in der Nitrilkautschuklösung eingestellt werden.

Die nach dem erfindungsgemäßen Verfahren behandelte Lösung des Nitrilkautschuks (Retentat) kann als solche direkt in den Handel kommen oder nach den dem Fachmann bekannten Aufarbeitungsverfahren wie Entgasung und Sprühtrocknung oder Koagulation in Wasser ggf. unter Salzzusatz oder unter Einsatz sonstiger geeigneter polarer Lösungsmittel mit anschließender Trocknung als Pulver, Krümel oder in Ballenform isoliert werden Andere Trocknungsverfahren wie Eindampfen, Dünnschichtverdampfen oder Gefriertrocknen sind ebenfalls möglich. Auch das Dry-Finishing ist einsetzbar, welches für Nitrilkautschuke in EP-A-2 368 916 beschrieben ist.

In einer weiteren besonderen Ausführung des erfindungsgemäßen Verfahrens kann ein gereinigter Nitrilkautschuk, dessen Gehalt an Diels-Alder-Nebenprodukten durch die Ultrafiltration verringert wurde, in einem weiteren Schritt mit einem Übergangsmetallkatalysator hydriert werden. Auch diese mit Übergangsmetallkatalysator und/oder dessen Bestandteilen behaftete Lösung des hydrierten Nitrilkautschuks kann wiederum einem Ultrafiltrationsverfahren unterzogen werden. Hierbei kann nicht nur gereinigter, hydrierter Nitrilkautschuk hergestellt werden, sondern auch der kostenintensive Übergangsmetallkatalysator zurückgewonnen werden.

Durch das erfindungsgemäße Verfahren können gereinigte Nitrilkautschuke bzw. deren hydrierte Folgeprodukte hergestellt werden, in denen der Gehalt an Diels-Alder Nebenprodukten um mindestens 50 Gew.-% gegenüber dem Gehalt im ursprünglich eingesetzten, ungereinigten Nitrilkautschuk verringert ist. Die durch das erfindungsgemäße Verfahren erhaltenen gereinigte Nitrilkautschuke bzw. deren hydrierte Folgeprodukte zeichnen sich durch etliche Vorteile aus. Sie zeigen geringere Formverschmutzung bei Spritzgußanwendungen und sind im Lebensmittelkontakt, im kosmetischen sowie medizinischen Bereich sowie im Elektroniksektor einsetzbar. Ein entscheidender Vorteil der erhaltenen gereinigten Nitrilkautschuke liegt darin, dass in sich anschließenden Veredlungsprozessen wie z.B. einer Hydrierung oder Metathese durch Nebenreaktionen, Korrosionseffekte oder Katalysatoredeaktivierungen zu erwartende Nachteile minimiert werden. Vorteilhafterweise kann in diesen Hydrier- und/oder Metathesereationen mit reduzierten Katalysatormengen gearbeitet werden und es fallen niedrigere Instandhaltungskosten aufgrund niedrigerer Korrosionspotentiale an. Darüber hinaus ist die Ultrafiltration ohne weiteres auch im großtechnischen Maßstab durchführbar.

## Patentansprüche

1. Verfahren zur Herstellung eines gereinigten Nitrilkautschuks, **dadurch gekennzeichnet, dass** ein Nitrilkautschuk, der Wiederholungseinheiten mindestens eines konjugierten Dien-Monomers und mindestens eines α,β-ungesättigten Nitril-Monomers aufweist und ferner Diels-Alder-Nebenprodukte dieser Monomere enthält, einer Ultrafiltration unterzogen wird, indem der in mindestens einem organischen Lösungsmittel gelöste Nitrilkautschuk ein- oder mehrfach über eine Ultrafiltrationsmembran geleitet wird, dabei ein nicht die Ultrafiltrationsmembran durchströmender, den gereinigten Nitrilkautschuk enthaltender Retentatstrom erhalten wird sowie ein die Ultrafiltrationsmembran durchströmender, Diels-Alder-Nebenprodukte enthaltender Permeatstrom, unter den Maßgaben, dass
(i) die Ultrafiltrationsmembran ein oder mehrere poröse Schichten aufweist und die Schicht mit den kleinsten Poren einen Porendurchmesser im Bereich von 1-200 nm besitzt,
(ii) die Ultrafiltration bei einer Temperatur im Bereich von 10 bis 150°C und unter Anwendung eines Druckes im Bereich von 1 bis 80 bar durchgeführt wird, und
(iii) die Strömungsgeschwindigkeit des Retentatstroms während der Ultrafiltration auf einen Wert größer 0,2 m/sec eingestellt wird, und
wobei der Gehalt an Diels-Alder-Nebenprodukten im gereinigten Nitrilkautschuk durch die Ultrafiltration um mindestens 50 Gew.-% reduziert wird gegenüber dem Gehalt im ursprünglich eingesetzten Nitrilkautschuk.

2. Verfahren gemäß Anspruch 1, **dadurch gekennzeichnet, dass** der Gehalt an Diels-Alder-Nebenprodukten im gereinigten Nitrilkautschuk um mindestens 80 Gew.%, bevorzugt um mindestens 90 Gew.% und bis zu 99,9 Gew.%, bezogen auf den Gehalt im ursprünglich eingesetzten Nitrilkautschuk, reduziert wird.

3. Verfahren gemäß Anspruch 1, **dadurch gekennzeichnet, dass** der in der Ultrafiltration ursprünglich eingesetzte Nitrilkautschuk einen Gehalt an Diels-Alder-Nebenprodukten der Monomere im Bereich von 0,1 bis 120 Gew.%, bezogen auf 100 Gew.% des Nitrilkautschuks aufweisen.

4. Verfahren gemäß Anspruch 1, 2 oder 3, wobei der eingesetzte Nitrilkautschuk Wiederholungseinheiten mindestens eines konjugierten Diens ausgewählt aus der Gruppe bestehend aus 1,3-Butadien, 1,2-Butadien, Isopren, 2,3-Dimethylbutadien, Piperylen und Gemische davon aufweist und mindestens eines α,β-ungesättigten Nitril-Monomers ausgewählt aus der Gruppe bestehend aus Acrylnitril, Methacrylnitril, Ethacrylnitril und Mischungen davon.

5. Verfahren gemäß Anspruch 4, wobei der eingesetzte Nitrilkautschuk Wiederholungseinheiten von Acrylnitril und 1,3-Butadien aufweist.

6. Verfahren gemäß Anspruch 4 oder 5, wobei der eingesetzte Nitrilkautschuk zusätzlich Wiederholungseinheiten von ein oder mehreren weiteren copolymerisierbaren Termonomeren aufweist, bevorzugt carboxygruppenhaltigen, copolymerisierbarer Termonomere, besonders bevorzugt α,β-ungesättigten Monocarbonsäuren, deren Estern, deren Amiden, α,β-ungesättigten Dicarbonsäuren, deren Mono- oder ―Diestern, deren entsprechenden Anhydriden oder Amiden.

7. Verfahren gemäß Anspruch 1, wobei der eingesetzte Nitrilkautschuk durch radikalische Polymerisation der entsprechenden Monomere in mindestens einem organischen Lösungsmittel hergestellt wird, bevorzugt in Dimethylacetamid, Monochlorbenzol, Toluol, Ethylacetat, 1,4-Dioxan, t-Butanol, Isobutyronitril, 3-Propanon, Dimethylcarbonat, 4-Methylbutan-2-on, Aceton, Acetonitril oder Methylethylketon.

8. Verfahren gemäß Anspruch 7, wobei die radikalische Polymerisation
(1) in Anwesenheit einer Verbindung der allgemeinen Strukturformel (VI) 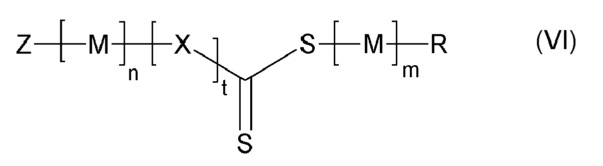 worin
Z für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
R (a) für den Fall, dass m ≠ 0 ist, die gleichen Bedeutungen besitzt wie der Rest Z und (b) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
M für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
n und m gleich oder verschieden sind und jeweils im Bereich von 0 bis 10.000 liegen,
t 0 oder 1 ist, sofern n= 0, und gleich 1 ist, sofern n ≠ 0, und
X für C(Z₂), N(Z), P(Z), P(=O)(Z), O, S, S(=O) oder S(=O)₂ steht, wobei Z in diesen Resten die gleiche Bedeutungen besitzen kann, wie zuvor für die Formel (VI) ausgeführt,
oder
(2) in Anwesenheit einer Verbindung ausgewählt aus der Gruppe bestehend aus
(i) Mercaptanen, die mindestens eine SH-Gruppe enthalten,
(ii) Mercaptoalkoholen, die mindestens eine SH-Gruppe und mindestens eine OH-Gruppe enthalten,
(iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
(iv) Thiocarbonsäuren,
(v) Disulfiden, Polysulfiden,
(vi) Thioharnstoff,
(vii) Allylverbindungen,
(viii) Aldehyden,
(ix) aliphatischen Halogenkohlenwasserstoffen, araliphatischen Halogenkohlen-wasserstoffen und
(x) Saccharin sowie
(xi) beliebigen Mischungen von zwei oder mehr der vorgenannten Molekulargewichtsregler (i)-(x).
oder
(3) in Abwesenheit der Verbindungen, die unter Punkt (1) und (2) (i) bis (xi) aufgeführt sind.

9. Verfahren gemäß einem der Ansprüche 1 bis 8, wobei das organische Lösungsmittel ausgewählt ist aus der Gruppe bestehend aus aromatischen, aliphatischen und chlorierten Lösungsmittel sowie Ketonen und cyclische Ethern, besonders bevorzugt aus der Gruppe bestehend aus Dimethylacetamid, Ethylacetat, 1,4-Dioxan, Acetonitril, tert.-Butanol, tert.-Butylnitril, Dimethylcarbonat, Methylacetat, Isobutyronitril, Aceton, Toluol, Benzol, Chlorbenzol, Chloroform, Methylenchlorid, Methylethylketon, Tetrahydrofuran und Gemische von zwei oder mehr dieser Lösungsmittel.

10. Verfahren gemäß einem der Ansprüche 1 bis 9, wobei die Ultrafiltration bei einer Temperatur im Bereich von 20°C bis 130°C und bei einem Druck im Bereich von 2 bar bis 50 bar durchgeführt wird.

11. Verfahren gemäß einem der Ansprüche 1 bis 10, wobei die Ultrafiltration bei einer Strömungsgeschwindigkeit des Retentatstroms an der Membran vorbei im Bereich von 1 bis 10 m/sec, besonders bevorzugt 2 bis 10 m/sec durchgeführt wird.

12. Verfahren gemäß einem der Ansprüche 1 bis 11, wobei die Schicht der Ultrafiltrationsmembran mit den kleinsten Poren einen Porendurchmesser im Bereich von 1-200 nm, bevorzugt 1 bis 100 nm und besonders bevorzugt im Bereich von 1 bis 50 nm besitzt.

13. Nitrilkautschuk erhältlich durch das Verfahren gemäß einem der Ansprüche 1 bis 12.

14. Nitrilkautschuk gemäß Anspruch 13 erhältlich nach dem Verfahren gemäß Anspruch 8 enthaltend
(i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren sowie
(ii) ein oder mehrere Strukturelemente der allgemeinen Formeln (I), (II), (III), (IV) oder (V) 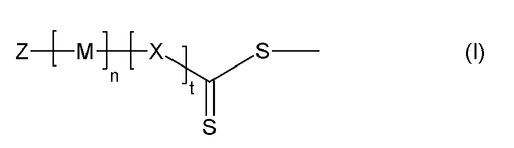 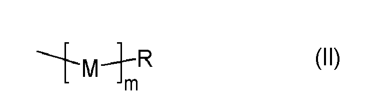 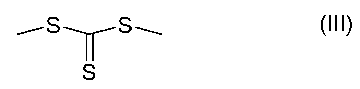 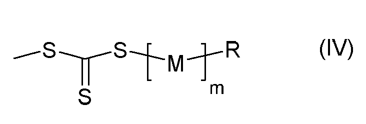 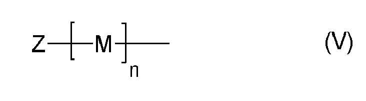 wobei
Z für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
M für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
n und m gleich oder verschieden sind und jeweils im Bereich von 0 bis 10.000 liegen,
t 0 oder 1 ist, sofern n= 0, und gleich 1 ist, sofern n ≠ 0,
X für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt und
R
(a) für den Fall, dass m ≠ 0 ist, die gleichen Bedeutungen besitzen kann wie der Rest Z und
(b) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht.

15. Verfahren zur Herstellung von Vulkanisaten, indem der Nitrilkautschuk gemäß Anspruch 13 oder 14 vulkanisiert wird.

16. Vulkanisate basierend auf einem Nitrilkautschuk nach Anspruch 13 oder 14.
